# EUROPEAN PATENT SPECIFICATION

(11) **EP 0 604 979 B1**
(45) Date of publication and mention of the grant of the patent: **18.08.1999**
(21) Application number: 93121012.4
(22) Date of filing: 28.12.1993
(51) Int. Cl.: F16F 15/22, F16F 15/00, F02B 75/06, G05D 19/02, H02P 7/00, B60K 5/12

(54) **Vibration damping control apparatus for vehicle**
Regelungsvorrichtung zur Vibrationsdämpfung für ein Fahrzeug
Dispositif de commande d'amortissement des vibrations pour véhicule

(30) Priority: 28.12.1992 JP 34851592; 28.07.1993 JP 18636893; 19.10.1993 JP 26091793
(43) Date of publication of application: 06.07.1994
(73) Proprietor: DENSO CORPORATION, Kariya-City, Aichi-Pref. (JP)
(72) Inventor: Tashiro, Hiroshi, Nagoya-shi, Aichi-ken (JP); Aota, Hiroyuki, Kariya-shi, Aichi-ken (JP); Murakawa, Takaji, Kariya-shi, Aichi-ken (JP); Yagi, Toyoji, Anjo-shi, Aichi-ken (JP)
(74) Representative: Winter, Brandl, Fürniss, Hübner, Röss, Kaiser, Polte, Kindermann Partnerschaft

(56) References cited:
- EP-A- 0 250 684
- EP-A- 0 440 088
- EP-A- 0 440 185
- DE-A- 3 544 613
- DE-A- 4 038 301
- DE-A- 4 041 011
- DE-A- 4 139 095
- FR-A- 2 657 050
- GB-A- 2 164 416
- PROCEEDINGS OF THE INTERNATIONAL SYMPOSIUM ON AUTOMOTIVE TECHNOLOGY AND AUTOMATION (ISATA), FLORENCE, MAY 20 - 24, 1991, no. SYMP. 24, 20 May 1991, NUCLEARE E DELLE ENERGIE ALTERNATIVE (ENEA), pages 391-398, XP000308635 YAMAKADO M ET AL: "VEHICLE VIBRATION SUPPRESSION USING ALTERNATOR TORQUE CONTROL"
- PATENT ABSTRACTS OF JAPAN vol. 011, no. 064 (M-565), 26 February 1987 & JP-A-61 220924 (MITSUBISHI ELECTRIC CORP), 1 October 1986,
- PATENT ABSTRACTS OF JAPAN vol. 010, no. 216 (M-502), 29 July 1986 & JP-A-61 054324 (MITSUBISHI MOTORS CORP), 18 March 1986,
- PATENT ABSTRACTS OF JAPAN vol. 008, no. 116 (M-299), 30 May 1984 & JP-A-59 023140 (TOYOTA JIDOSHA KOGYO KK), 6 February 1984,
- PATENT ABSTRACTS OF JAPAN vol. 011, no. 028 (M-557), 27 January 1987 & JP-A-61 200333 (NISSAN MOTOR CO LTD), 4 September 1986,
- PATENT ABSTRACTS OF JAPAN vol. 017, no. 133 (M-1383), 19 March 1993 & JP-A-04 311631 (HITACHI LTD;OTHERS: 01), 4 November 1992,
- PATENT ABSTRACTS OF JAPAN vol. 012, no. 134 (M-689), 23 April 1988 & JP-A-62 255534 (ISUZU MOTORS LTD), 7 November 1987,
- PATENT ABSTRACTS OF JAPAN vol. 004, no. 029 (M-002), 14 March 1980 & JP-A-55 005453 (TOYOTA MOTOR CORP), 16 January 1980,
- PATENT ABSTRACTS OF JAPAN vol. 012, no. 113 (M-683), 9 April 1988 & JP-A-62 242152 (FUJI HEAVY IND LTD), 22 October 1987,
- PATENT ABSTRACTS OF JAPAN vol. 013, no. 484 (M-886), 2 November 1989 & JP-A-01 190922 (HITACHI), 1 August 1989,
- PATENT ABSTRACTS OF JAPAN vol. 008, no. 069 (M-286), 31 March 1984 & JP-A-58 217743 (TOYO KOGYO KK), 17 December 1983,

## Description

### BACKGROUND OF THE INVENTION

### 1. Technical Field of the Invention

The present invention relates generally to a vibration damping apparatus for automotive vehicles, and more particularly to a vibration damping apparatus operable to minimize vibration transmitted to a vehicle body caused by engine rotation.

### 2. Background Art

JP-A- 61-65023 discloses a vibration control system for reducing torque variation of an internal combustion engine utilizing an electric generator and an electric motor which are arranged respectively to provide additional torque to the engine and consume part of engine torque. This conventional system is designed to detect engine speed to control operation switching timing between the electric generator and the electric motor based thereon. When the engine torque is high, the electric generator provides a reverse torque to eliminate an excess of the engine torque, while, when the engine torque is low, the electric motor provides additional torque to compensate a lack of the engine torque. The operation switching timing between the electric generator and the electric motor are selected according to the detected engine speed based on the fact that the engine is subjected to the variation in combustion torque when the engine speed is high, while the engine undergoes the variation in inertial torque caused by piston movement when the engine speed is low, and the phase of the variation in torque is changed according to the engine speed.

Generally, the vehicle vibrations consist of a rotational vibration component (i.e., a torque variation component) caused by reaction of a small variation in speed of a crankshaft and a vertical vibration component produced by reaction of vertical displacement of a piston. The above prior art torque vibration control system thus, raises a drawback in that although the variation in engine torque, or the rotational vibration component developed by the reaction of the small variation in speed of the crankshaft may be minimized, the vertical vibration component is not reduced.

### SUMMARY OF THE INVENTION

It is therefore an object of the present invention to provide a vehicle with an improved vibration damping control system which is operable to minimize a wide range of vehicle vibration caused by engine revolution.

The object is solved by the subject-matter of the claim or 9 referring to a vehicle powered by an internal combustion engine and provided with a vibration damping control system, and by the subject-matter of claim 21 referring to a method of damping vibration in a vehicle powered by an internal combustion engine.

Further advantageous modifications of the present invention are subject matter of the sub-claims.

### BRIEF DESCRIPTION OF THE DRAWINGS

The present invention will be understood more fully from the detailed description given hereinbelow and from the accompanying drawings of the preferred embodiment of the invention, which, however, should not be taken to limit the invention to the specific embodiment but are for explanation and understanding only.

In the drawings:

Fig. 1 is a block diagram which shows a vibration damping control system according to the present invention.

Fig. 2 illustrates an alternative arrangement wherein an electric generator-motor is mechanically connected to a flywheel of an engine.

Fig. 3 is a vector illustration which shows a frequency component of vehicle vibration.

Fig. 4 is a flowchart of a program or sequence of logical steps performed by an operation mode determining device of a vibration damping control system.

Fig. 5 is a graph which shows the relations between idling speed of an engine and vehicle vibration under non-control, conventional vibration-damping control, and a vibration-damping control of the present invention.

Fig. 6 is a block diagram which shows a vibration damping control system according to an alternative embodiment of the present invention.

Fig. 7 is a flowchart of a program or sequence of logical steps performed by an operation mode determining device of the vibration damping control system, as shown in Fig. 6.

Fig. 8 is a graph which shows variations in vehicle vibration components according to the variation in crank angle.

Fig. 9 is a graph which shows a phase angle between vehicle vibration and compensating vibration torque variation produced by an electric generator-motor of a vibration damping control system of the invention.

Fig. 10 is a graph which shows the relation between a crank angle and power generation-motor mode switching timing in an electric generator-motor of a vibration damping control system of the invention.

Fig. 11 is an illustration which shows a vibration measurement position on a steering wheel.

Figs. 12 and 13 are illustrations which show vibration frequency distributions respectively at an idling engine speed of 400 rpm under non-vibration control and vibration control according to the present invention.

Fig. 14 is an illustration which shows vibration component vectors in a maximum vibration area A, as shown in Fig. 12.

Fig. 15 is an illustration which shows vibration component vectors in a minimum vibration area G, as shown in Fig. 12.

Fig. 16(a) is a graph which shows a torque variation produced by an engine with respect to a crank angle.

Fig. 16(b) is a graph which shows the relation between a rotational vehicle vibration component and a vibration component which is 180 deg. out of phase therewith.

Fig. 16(c) is a graph which shows a controlled torque of an electric generator-motor with respect to a crank angle.

Fig. 16(d) is a graph which shows a primary frequency component of the controlled torque, as shown in Fig. 16(c).

Fig. 17 is a block diagram which shows a vibration damping control system according to an alternative embodiment of the present invention.

Fig. 18 is a flowchart of a program or sequence of logical steps performed by an operation mode determining device of the vibration damping control system, as shown in Fig. 17.

Fig. 19(a) is a time chart which shows an exciting pulse voltage applied to an alternator.

Fig. 19(b) is a time chart which shows a compensating torque variation produced by an alternator.

Fig. 20 is a time chart which shows power generation-motor mode switching timing according to an alternative embodiment of the invention.

Fig. 21 is a block diagram which shows a vibration damping control system according to an alternative embodiment of the present invention.

Fig. 22 is a flowchart of a program or sequence of logical steps performed by an operation mode determining device of the vibration damping control system, as shown in Fig. 21.

Fig. 23 is a block diagram which shows a vibration damping control system according to an alternative embodiment of the present invention.

Fig. 24 is a flowchart of a program or sequence of logical steps performed by an operation mode determining device of the vibration damping control system, as shown in Fig. 23.

Fig. 25 is a graph which shows the relation between a vehicle vibration level and idling engine speed when vehicle weight is changed.

Fig. 26 is a flowchart of a program or sequence of logical steps performed by an operation mode determining device according to a modification of the vibration damping control system, as shown in Fig. 23.

Fig. 27 is a block diagram which shows a vibration damping control system according to an alternative embodiment of the present invention.

Fig. 28 is a flowchart of a program or sequence of logical steps performed by an operation mode determining device of the vibration damping control system, as shown in Fig. 27.

### DESCRIPTION OF THE PREFERRED EMBODIMENT

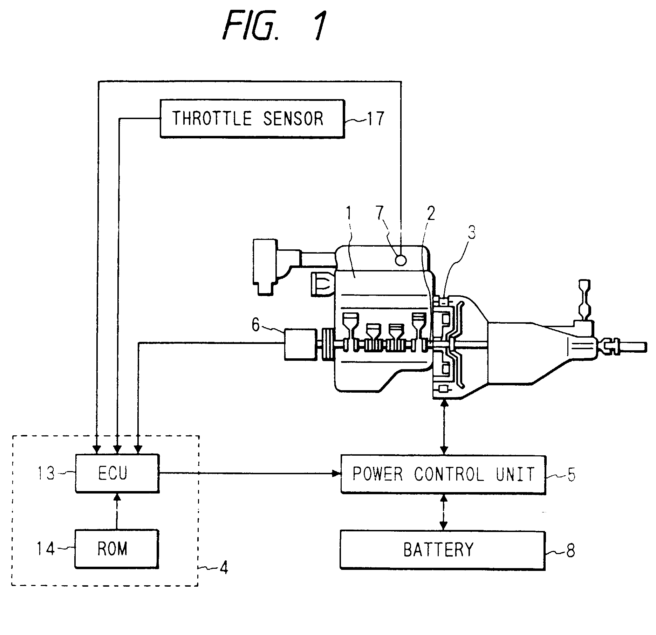

Referring now to the drawings, wherein like numbers refer to like parts in several views, particularly to Fig. 1, there is shown a vibration damping control system for an automotive vehicle according to the present invention. The vibration damping control system is adapted for minimizing vibration during engine operation, especially, an engine idling operation, and includes generally an electric generator-motor 3, an operating mode determining device 4, a power control unit 5, a crankshaft position sensor 6, an engine speed sensor 7, a battery 8, and a throttle valve position sensor 17.

The electric generator-motor 3 is connected to a crankshaft 2 of an internal combustion engine 1 to perform the dual torque transmission function of providing an additional torque to the crankshaft 2 and consuming part of engine torque therethrough. The electric generator-motor 3 is provided with a well-known rotary electric machine which includes an exciting coil and an armature coil, and is capable of selecting between power generating and motor modes according to the degree of voltage applied to each coil. In the power generating mode, the electric generator-motor 3 is responsive to the torque transmitted from the engine 1 through the crankshaft 2 to transform it into electrical energy which is, in turn, charged in the battery 8. In the motor mode, the electric generator-motor 3 is supplied with electric power from the battery 8 to rotate the crankshaft 2 further in the same direction of engine revolution so that an additional torque is provided to the engine 1.

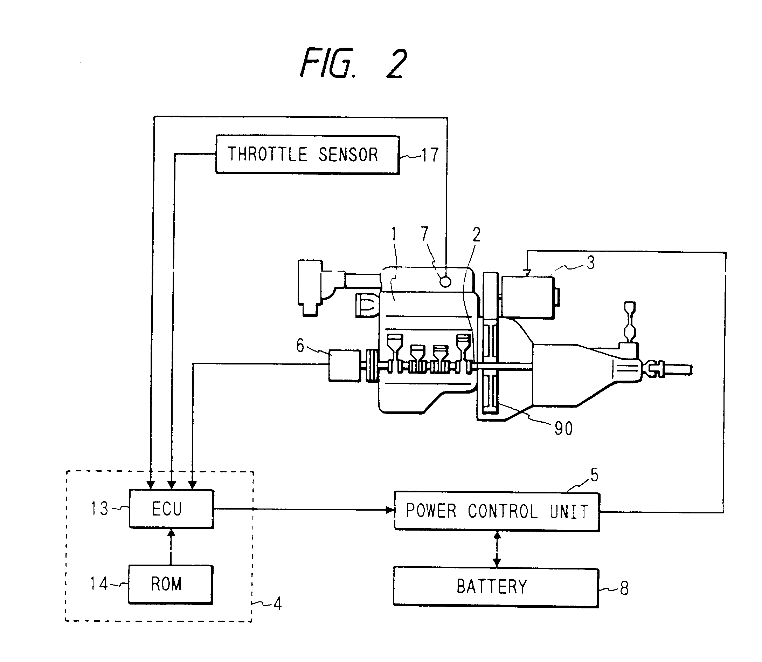

The electric generator-motor 3 may alternatively be, as shown in Fig. 2, connected to a flywheel 90 of the engine 1.

The throttle valve position sensor 17 detects an opening degree of a throttle valve (not shown) of the engine 1 and provides a signal indicative thereof to the operating mode determining device 4.

The crankshaft position sensor 6 is arranged to detect angular position, or crank angle of the crankshaft 2 of the engine 1, and provides a signal indicative thereof to the operating mode determining device 4.

The engine speed sensor 7 monitors rotational speed of the engine 1 and provides a signal indicative thereof to the operating mode determining device 4. It is known in the art that when the rotational speed of the engine 1 changes, it will cause the phase difference between primary frequency components of vehicle vibrations, as will be described hereinafter, and a crank angle of the crankshaft 2 (i.e., the phase difference between a resultant vector of the primary frequency components of the vehicle vibrations and a reference crank angle) to change.

The operating mode determining device 4 determines torque transmission timing of the electric generator-motor 3 capable of reducing the primary frequency components of the vehicle vibrations, or the phase difference in torque vector variation based on the rotational speed of the engine 1. The power control unit 5 switches between the power generating mode and the motor mode with the torque transmission timing determined by the operating mode determining device 4.

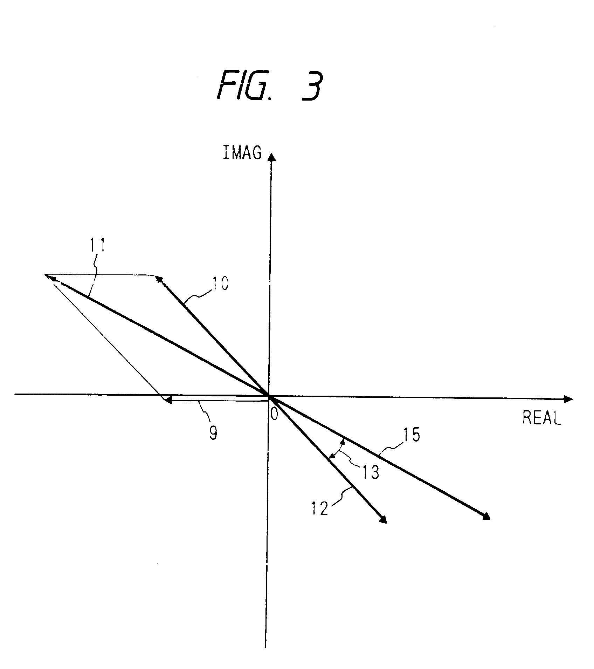

To understand the vehicle vibrations the vibration damping control system of the invention intends to control, reference is made to Fig. 3.

In the following discussion on the first embodiment, it is assumed that the vehicle vibration represents vibration of the engine 1 alone, and the transfer function between the engine 1 and a vehicle body, or change rates of phase and amplitude of vibration therebetween are neglected.

In a vehicle on which the engine 1 (e.g., in-line four-cylinder internal combustion engine) is mounted, the primary frequency components of vehicle vibrations, as mentioned above, usually include primary combustion frequency components generated by combustion operation of the engine 1 (the secondary component of engine speed). The main component of the primary combustion frequency components includes a vertical vibration of the engine 1 caused by rectilinear movement of a rectilinear part such as a piston of the engine and a rotational vibration generated around a rotational part, or the crankshaft 2. These vibrations have the same frequency in proportion to the frequency of a crank angle signal from the crankshaft position sensor 6, and there is some phase difference between both the vibrations. The primary frequency components of the vehicle vibrations are, as shown in Fig. 3, represented by a resultant vibration vector 11 formed of a vertical vehicle vibration component 9 caused by the vertical vibration of the engine 1, as mentioned above, (in this discussion, it refers to the vertical vibration of the engine 1 alone, but a vertical vibration component at a particular portion of the vehicle body may alternatively be considered) and a rotational vehicle vibration component 10 developed by the rotational vibration of the engine 1, as explained above, generated around a rotational driving system such as the crankshaft 2 of the engine 1.

The rotational vibration around the crankshaft 2 of the engine 1 assume a preselected phase angle relative to a reference crank angle, or crank angle signal from the crankshaft position sensor 6. This phase angle is subject to change according to engine speed. The rotational vehicle vibration component 10 thus, shows a preselected phase angle relative to the crank angle signal which is also changed according to the engine speed.

Similarly, the vertical vibration of the engine 1 exhibits a preselected phase angle relative to the crank angle signal which undergoes change according to the engine speed. The vertical vehicle vibration component 9 thus shows a preselected phase angle relative to the crank angle which is also changed according to the engine speed.

Accordingly, it will be noted that the primary frequency component (resultant vibration vector) 11 of the vehicle vibration assumes a preselected phase angle relative to the crank angle signal from the crankshaft position sensor 6, which is varied according to the engine speed.

The electric-generator motor 3 is, as shown in Fig. 1, connected to the pistons through the crankshaft 2. The vertical vibration results from vertical displacements of the pistons. Thus, the vertical vibration as well as the rotational vibration is transmitted to the electric-generator motor 3 which is designed to exchange mechanical energy with the pistons through the crankshaft 2.

Therefore, by switching the operational mode of the electric generator-motor between the power generating mode and the motor mode, engine torque variation generated every combustion cycle is smoothed.

As clear from the above, it is the gist of this embodiment to control the operation switching timing of the electric generator-motor 3 between the power generating mode and the motor mode (hereinafter, referred to as "power generation-motor mode switching timing") to produce a vibration damping vector 15, as shown in Fig. 3, having the same frequency as the resultant vibration vector 11 in an opposite phase thereto for reducing the vertical vehicle vibration component 9 and rotational vehicle vibration component 10.

In the first embodiment, a torque, or vibration transmission lag occurring between the electric generator-motor 3 and the vehicle body is, as mentioned previously, neglected. In addition, in Fig. 3, numeral 12 denotes a vibration damping vector having the same frequency as the rotational vehicle vibration component 10 180 deg. out of phase therewith and also having a phase angle 13 relative to the vibration damping vector 15 produced by the electric generator-motor 3.

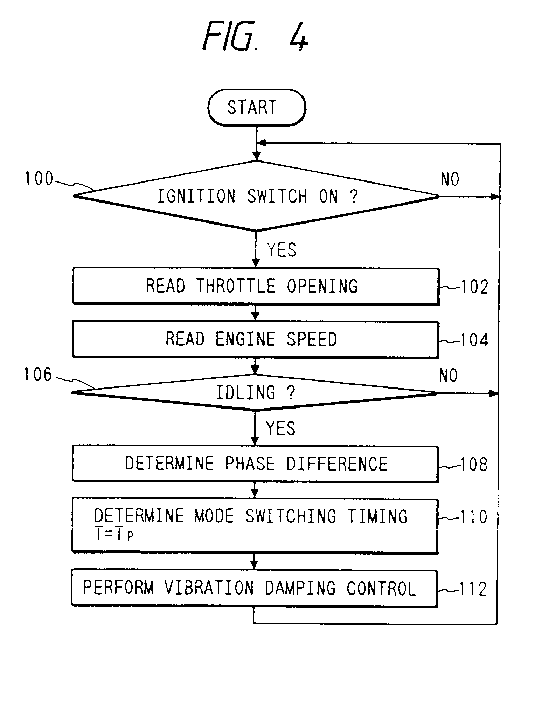

Referring to Fig. 4, there is shown a flowchart of a program or sequence of logical steps performed by the vibration damping control system according to the first embodiment.

After entering the program, the routine proceeds to step 100 wherein it is determined whether an ignition switch (not shown) is turned on or not, that is, whether the engine 1 is in operation or not. If a NO answer is obtained, the routine repeats step 100. Alternatively, if a YES answer is obtained, the routine then proceeds to step 102 wherein the opening degree of the throttle valve is read in from the throttle valve position sensor 17. Subsequently, in step 104, the engine speed is read in from the engine speed sensor 7.

The routine then proceeds to step 106 wherein it is determined whether the engine is idling or not based on the opening degree of the throttle valve and the engine speed. If a NO answer is obtained concluding that the engine is not idling, the routine returns back to step 100. Alternatively, if a YES answer is obtained, the routine then proceeds to step 108 wherein a constant value of the phase difference corresponding to an idling speed of the engine 1 is read out of a ROM 14 of the operation mode determining device 4 under the assumption that a variation in the idling speed is usually small and thus a variation in phase difference due to the variation in the idling speed is negligible.

The phase difference, as referred to in the first discussion, is a phase angle between the primary frequency component of the vehicle vibration (the resultant vibration vector 11) and the crank angle. The ROM 14 prestores the constant value of the phase difference of the primary frequency component of the vehicle vibration during idling modes of engine operation.

Subsequently, the routine proceeds to step 110 wherein the power generation-motor mode switching timing T of selecting between the power generation and the motor modes in the electric generator-motor 3 is set to Tp based on the phase difference derived in step 108. In other words, the power generation-motor mode switching timing Tp is determined which is required to have the electric generator-motor 3 produce the torque variation in an opposite phase with the primary frequency component of the vehicle vibration. The power generation-motor mode switching timing may alternatively be directly read out of the ROM 14 in step 108.

The routine then proceeds to step 112 wherein the electric generator-motor 3 is driven with the power generation-motor mode switching timing determined in step 110 to provide compensating torque vibrations for attenuating the vibrations of the engine 1. This operation in detail is performed in the following manner.

Values of voltages to be applied to the exciting coil and the armature coil of the electric generator-motor 3 are read out at every preselected crank angular position based on the sensor signal from the crankshaft position sensor 6 in the electric control unit (ECU) 13 of the operation mode determining device 4. These voltage values are mapped, on a table stored in the ROM 14, at preselected crank angular intervals only over one cycle, respectively. Based on the voltage values, the ECU 13 then provides pulse voltages, having a duty ratio corresponding to the power generation-motor mode switching timing determined, to the power control unit 5. The power control unit 5 power-switches the pulse voltages with the voltage supplied from the battery 8 according to the duty ratio of the pulse voltages, and applies them to the exciting coil and the armature coil of the electric generator-motor 3.

The electric generator-motor 3 is responsive to the pulse voltages from the power control unit 5 to produce a torque variation having the same frequency as the primary frequency component of the vehicle vibration and in an opposite phase relative thereto so that a variation in torque or vibration in an engine idle range is reduced.

In step 112, the electric generator-motor 3 may be operated with the power generation-motor mode switching timing determined to alternately produce electric energy and consume power of the battery 8 at a constant level. This makes the vibration damping control more easy.

With the above vibration damping control according to the first embodiment, a reverse torque variation (i.e., the vibration damping torque 15) 180 deg. shifted in phase from the resultant vibration vector 11 which is advanced in phase relative to the rotational vehicle vibration component 10 and is delayed in phase relative to the vertical vehicle vibration component 9 is produced, thereby enhancing a vehicle vibration damping effect.

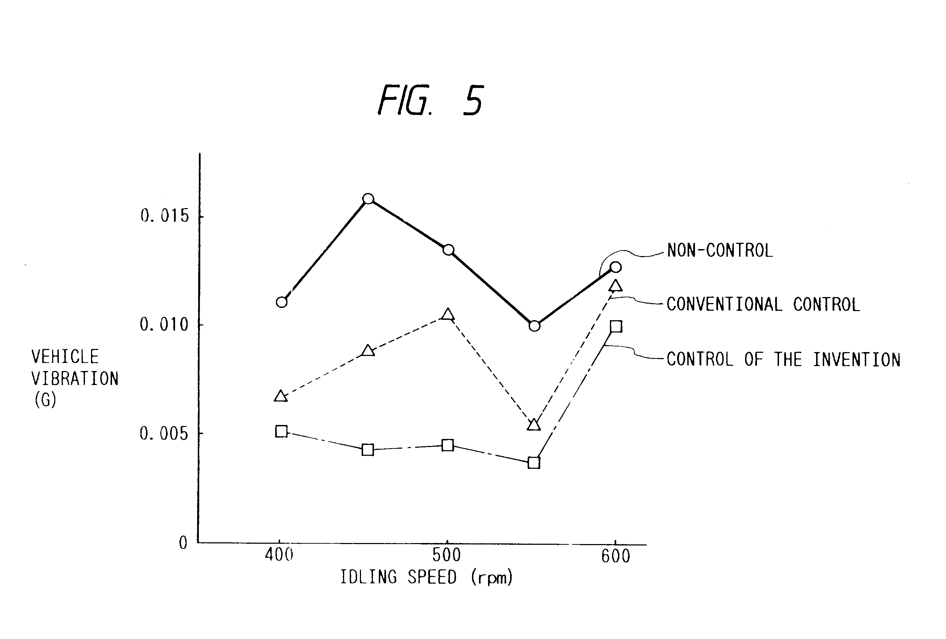

Fig. 5 shows the vibration damping effects under the control of this invention, conventional control, and non-control in tests performed for vibrations of a vehicle body on which an electronic fuel injection type 1.8-liter in-line four-cylinder engine is mounted. A semiconductor acceleration sensor is used for vibration measurement at a portion on a steering wheel. A solid line shows vehicle vibrations under non-control. A broken line shows vehicle vibrations under the conventional control which produces a compensating torque variation (i.e., the vibration damping vector 12) in an opposite phase relative to the rotational vehicle vibration component 10, as shown in Fig. 3. A dashed line represents vehicle vibrations under the control of this invention wherein the compensating torque variation (i.e., the vibration damping vector 15) is produced in an opposite phase relative to the primary frequency component of the vehicle vibration (i.e., the resultant vibration vector 11). The texts reveals that the vehicle vibrations during idling engine operation are greatly reduced under the vibration damping control of this invention.

In the above embodiment, the phase difference between the primary frequency component of the vehicle vibration and the crank angle is read of out the ROM 14. It should be noted, however that the vertical vehicle vibration component 9 and the rotational vehicle vibration component 10 are determined separately from each other to mathematically calculate the resultant vibration vector 11. In this case, the greatest frequency vibration during engine idling modes is attenuated effectively.

The vibration damping control system according to a second embodiment will be explained below with reference to Fig. 4. This embodiment is a modification of the above first embodiment and different therefrom only in step 108. Thus, explanation of other steps in detail will be omitted here.

In step 108, a variation in the phase difference due to a small variation in engine idling frequency is determined by look-up using mapped data stored in the ROM 14 which represent the relation between the phase difference between the primary frequency component of the vehicle vibration and the reference crank angle, and the engine speed.

With the vibration damping control system of the second embodiment, the primary frequency component of the vehicle body during the engine idling modes is reduced effectively even when the engine idling frequency fluctuates slightly.

A third embodiment will be explained below which is also a modification the first embodiment, and performs the same steps, as shown in Fig. 4, except for step 108.

Usually, a time lag occurs between production of the torque variation by the electric generator-motor 3 and a time when the torque variation is transmitted to the engine 1 so that the vehicle vibration is damped, thereby causing a phase delay to occur between the torque variation produced by the electric generator-motor 3 and an actual vehicle vibration. This phase delay is caused by a torque transmission lag between the electric generator-motor 3 and the engine 1 and a vibration transmission lag between the engine 1 and the vehicle body. Accordingly, in the third embodiment, the phase difference as is determined in the first embodiment is corrected based on the phase delay, as explained above, in the following manner.

In step 108 the phase difference between the torque variation of the electric generator-motor 3 serving to minimize the primary frequency component of the vehicle vibration induced, at a preselected vibration-exciting location (e.g., a seat) on the vehicle body, by vibrations transmitted from the engine 1 and the reference crank angle, is read out of the ROM 14. This phase difference is obtained by summing a first vibration phase difference between vibration (a resultant vibration vector) of the engine 1 and the reference crank angle and a second vibration phase difference corresponding to a time lag required for the vibration of the engine 1 to be transmitted to the vibration-exciting location on the vehicle body, and subtracting therefrom a third phase difference between the primary frequency component of vehicle vibration generated at the preselected vibration-exciting location due to the torque variation of the electric generator-motor 3 and the reference crank angle.

The sum of the first and second phase differences represents the phase difference between the primary frequency component of the vehicle vibration excited at the preselected vibration-exciting location of the vehicle body and the reference crank angle. The difference between the sum of the first and second phase differences and the third phase difference indicates the phase difference between the vibration of the engine 1 at a location where the electric generator-motor 3 is mounted and the reference crank angle. In a subsequent step, the power generation-motor mode switching timing T of selecting between the power generation and the motor modes in the electric generator-motor 3 which produces a torque variation whose phase difference is opposite the phase difference determined above. With this arrangement, the vehicle vibration at the preselected vibration-exciting location (e.g., a seat) of the vehicle body is minimized. It is also desirable that the amplitude of the torque variation of the electric generator-motor 3 be set to minimize the primary frequency component at the preselected vibration-exciting location.

A fourth embodiment will be explained below with reference to Fig. 4. This embodiment is a modification of the second embodiment, and is designed in view of the fact that the amplitude of the primary frequency component of the vehicle vibration (representing vibration of the engine 1 in this embodiment) will be changed according to the variation in engine speed.

This embodiment performs the same steps 100 to 106 as in the second embodiment, and is adapted to modify the amplitude of the torque variation produced by the electric generator-motor 3 according to the variation in engine speed in addition to the phase difference control of the torque variation according to the variation in engine speed.

After step 106, the routine goes to step 108 wherein the phase difference and the amplitude are determined, according to the engine speed, by look-up using mapped data showing the relations between the engine speed and the phase difference and between the engine speed and the amplitude, stored in the ROM 14. This phase difference is, as mentioned above, a phase angle between the primary frequency component (i.e., the resultant vibration vector 11) of the vehicle vibration and the reference crank angle. The amplitude, as discussed herein, represents an amplitude of the primary frequency component of the vehicle vibration (representing vibration of the engine 1 in this embodiment).

Subsequently, in step 110, the power generation-motor mode switching timing of selecting between the power generation and the motor modes in the electric generator-motor 3 and the magnitude of electric energy produced by the electric generator-motor 3, that is a vibration damping vector, are determined based on the phase difference and the amplitude derived in step 108.

In this embodiment, the time required for the torque variation produced by the electric generator-motor 3 to be transmitted to the engine 1 so that the vehicle vibrations are damped is neglected.

With the vibration damping control system of the fourth embodiment, the electric generator-motor 3 operates with the power generation-motor mode switching timing derived in step 110 to provide compensating torque vibrations in an opposite phase relative to the primary frequency component of the vehicle vibration (representing vibration of the engine 1 in this embodiment) with amplitude which is substantially the same as that of the primary frequency component.

A fifth embodiment will be explained below which is a modification of the third embodiment based on the fact that the amplitude of the primary frequency component of the vehicle vibration (representing vibration at the preselected vibration-exciting location on the vehicle body) will be changed according to the variation in engine speed. This embodiment is adapted to control the amplitude of the torque variation produced by the electric generator-motor 3 according to the variation in engine speed in addition to the phase difference control of the torque variation according to the variation in engine speed in the third embodiment.

The steps 100 to 106 are the same as in the third embodiment.

In step 108, the phase difference and the amplitude are determined, according to the engine speed, by look-up using mapped data showing the relations between the engine speed and the phase difference and between the engine speed and the amplitude, stored in the ROM 14. This phase difference represents a phase angle between the reference crank angle and a torque variation generated by the electric generator-motor 3 serving to minimize the primary frequency component of the vehicle vibration excited, at the preselected vibration-exciting location (e.g., a seat) on the vehicle body, by vibrations transmitted from the engine 1. The amplitude, as discussed herein, represents the magnitude of torque variation produced by the electric generator-motor 3 which minimizes the primary frequency component of the vehicle vibration (representing vibration at the preselected vibration-exciting location).

Subsequently, in step 110, the power generation-motor mode switching timing of selecting between the power generation and the motor modes in the electric generator-motor 3 which produces the torque variation in an opposite phase relative to the primary frequency component (i.e., the resultant vibration vector 11) of the vehicle vibration and the magnitude of electric energy produced by the electric generator-motor 3, that is, a vibration damping vector is determined based on the phase difference and the amplitude derived in step 108.

With the vibration damping control system of this embodiment, the electric generator-motor 3 operates with the power generation-motor mode switching timing derived in step 110 to provide compensating vibrations in an opposite phase relative to the primary frequency component of the vehicle vibration with amplitude which is substantially the same as that of the primary frequency component, to the preselected vibration-exciting location on the vehicle body.

A sixth embodiment will be explained below with reference to Fig. 4. This embodiment is a modification of the second to fifth embodiments, and performs step 108, as explained below, after step 106.

Unlike the above second to fifth embodiments which determine the phase difference and/or the amplitude of the torque variation produced by the electric generator-motor 3 by look-up using the table stored in the ROM 14 based on the engine speed, the sixth embodiment has tables in the ROM 14 showing the relations among the phase difference, the engine speed, and the opening degree of the throttle valve and between the amplitude, the engine speed, and the opening degree of the throttle valve, and controls based thereon the torque variation of the electric generator-motor 3.

Usually, during idling modes of engine operation, the throttle valve is not always closed completely. The engine 1 sometimes lies in an idling operation range with the throttle valve being opened slightly. Accordingly, this embodiment features vibration damping control based on the opening degree of the throttle valve during the engine idling operation.

In step 108, the phase difference and the amplitude of the primary frequency component of the vehicle vibration are determined based on the opening degree of the throttle valve and the engine speed derived in steps 102 and 104, respectively.

In the subsequent step 110, the power generation-motor mode switching timing of selecting between the power generation and the motor modes in the electric generator-motor 3 is determined in a similar manner to the above embodiments. In step 112, the electric generator-motor 3 is driven with the power generation-motor mode switching timing determined in step 110.

In addition, the sixth embodiment may alternatively perform step 108, as discussed below.

Initially, the phase difference and the amplitude of the primary frequency component of the vehicle vibration are determined only based on the engine speed during idling modes of engine operation, for example. Subsequently, the phase difference and amplitude correction values are determined in a preselected relation to the opening degree of the throttle valve determined in step 102, and then the phase difference and the amplitude determined previously are corrected according to the phase difference and amplitude correction values.

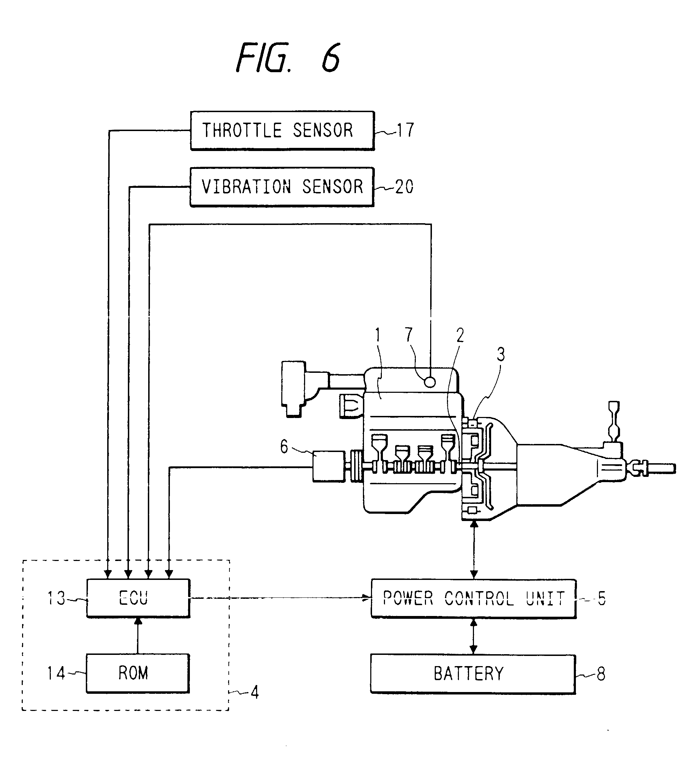

Referring to Fig. 6, there is shown a vibration damping control system according to a seventh embodiment of the invention. The system of this embodiment, as shown in the drawing, further includes a vibration sensor 20 for directly detecting the primary frequency component of the vehicle vibration, and performs feedback-control based thereon to correct the power generation-motor mode switching timing of the electric generator-motor 3.

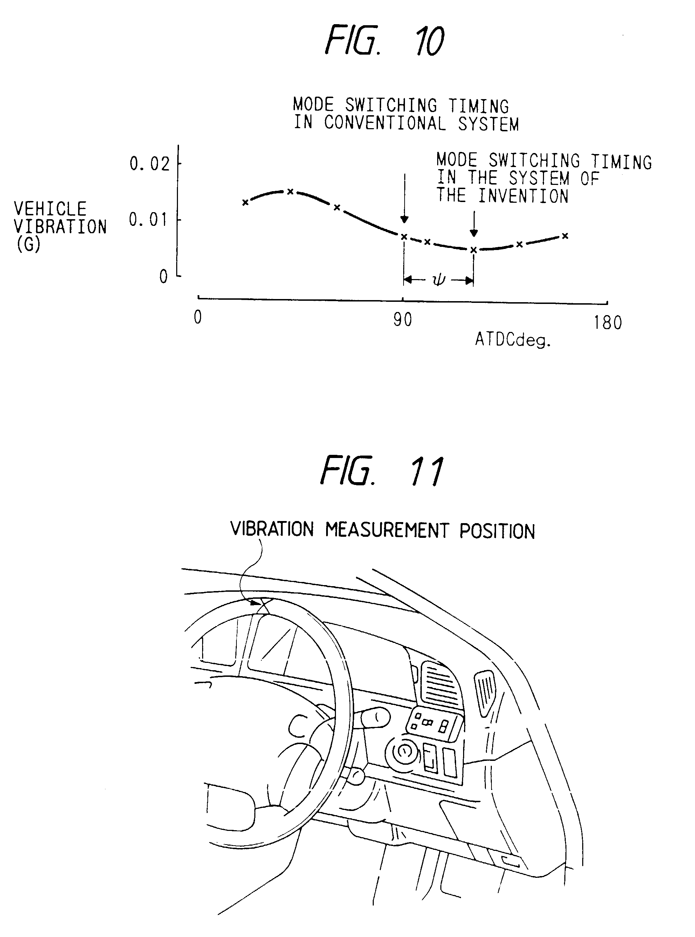

The vibration sensor 20 includes a semiconductor acceleration sensor which is, as shown in Fig. 11, mounted on the top of a steering wheel to measure the primary frequency component consisting of the vertical vibration component 9 of the engine 1 and the rotational vibration component 10 around the crankshaft 2 in a direction perpendicular to the steering wheel (i.e., a direction parallel to a steering column).

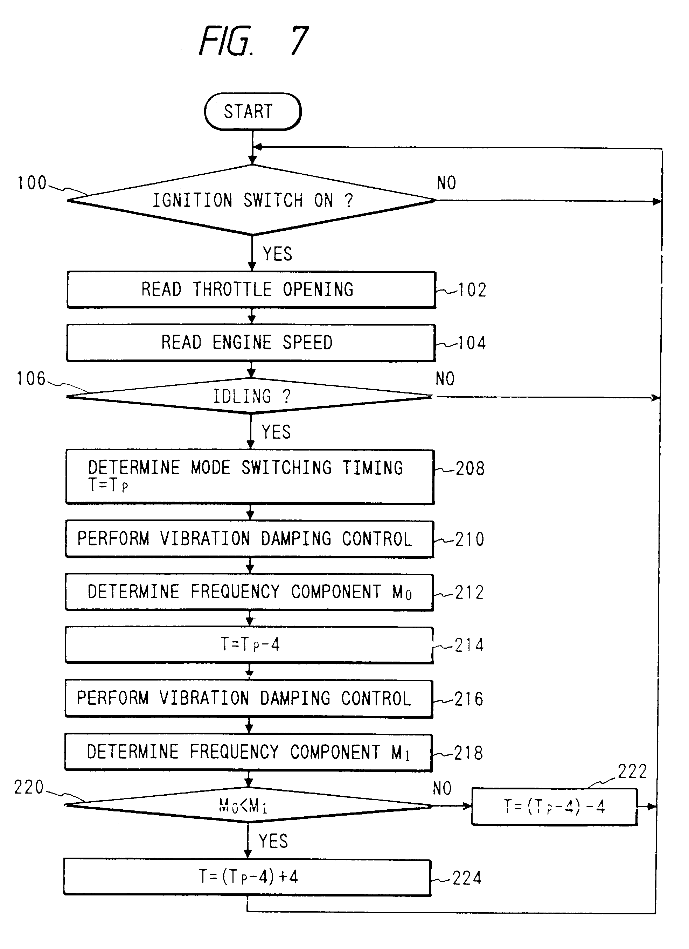

Fig. 7 shows a flowchart of a program or sequence of logical steps performed by the operation mode determining device 4 of the seventh embodiment.

Steps 100 to 106 are similar to the ones, as shown in Fig. 4, and explanation thereof in detail will be omitted here for the sake of simplicity.

In step 208, when the control cycle is for the first time, the power generation-motor mode switching timing T is set to a preselected initial value Tp stored in the ROM 14.

The routine then proceeds to step 210 wherein the ECU 13, similar to the operation in step 112, as shown in Fig. 4, provides pulse voltages to the power control unit 5 so that the electric generator-motor 3 produces a torque variation according to the power generation-motor mode switching timing T (= Tp).

The routine then proceeds to step 212 wherein a primary frequency component M₀ (i.e., the resultant vibration vector 11) is determined based on a sensor signal output from the vibration sensor 20.

Subsequently, in step 214, the power generation-motor mode switching timing is delayed for a preselected angle, for example, 4 deg. in term of a crank angle. The routine then proceeds to step 216 wherein the same operation as in step 210 is performed so that the electric generator-motor 3 is driven with that power generation-motor mode switching timing.

In step 218, a primary frequency component M₁ is determined based on a sensor signal output from the vibration sensor 20.

The routine then proceeds to step 220 wherein it is determined whether the primary frequency component M₀ is smaller than the primary frequency component M₁ or not. If a YES answer is obtained (M₀ < M₁), concluding that the primary frequency component of the vehicle vibration is increased due to the delay of the power generation-motor mode switching timing, the routine then proceeds to step 224 wherein the power generation-motor mode switching timing T is advanced by 4 deg. in terms of an crank angle so that it may be returned to the same timing as in step 208. Alternatively, if a NO answer is obtained in step 220 (M₀ ≥ M₁), concluding that the primary frequency component M₀ is greater than or equal to M₁ and thus the primary frequency component M₁ is either decreased or balanced with M₀, the routine then proceeds to step 222 wherein the power generation-motor mode switching timing T is further delayed for 4 deg. in terms of an crank angle under the assumption that it is possible to further decrease the primary frequency component, after which the routine returns back to the initial step 100. In subsequent control cycles, the routine flows directly from step 106 to 210 if a positive answer is obtained in step 206. With the above feedback control, the primary frequency component is reduced to a minimum.

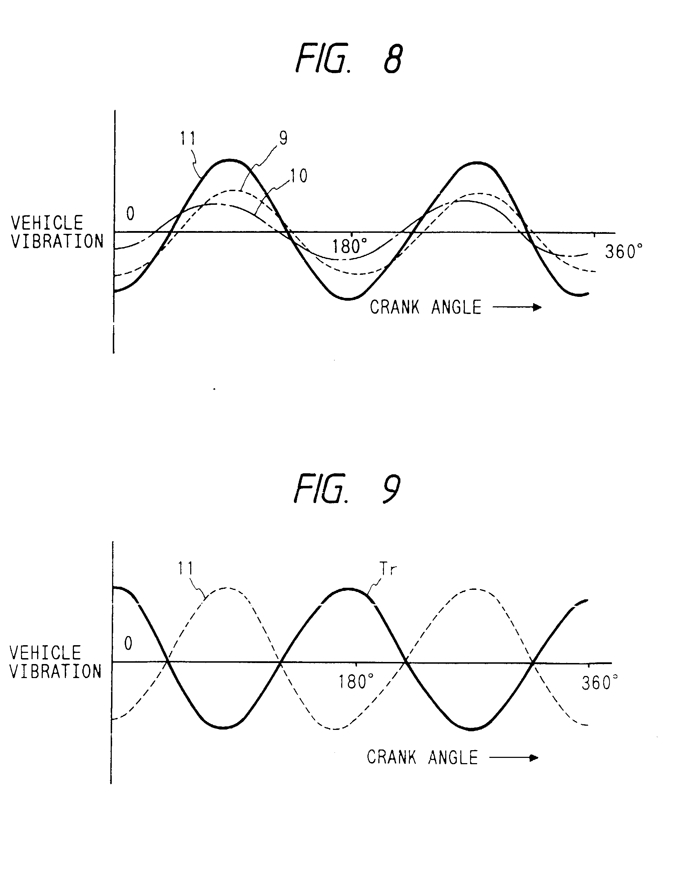

Fig. 8 shows the relation among the primary frequency component 11, the vertical vehicle vibration component 9, and the rotational vehicle vibration component 10. Fig. 9 shows the relation between the primary frequency component 11 and the variation in vibration compensating torque Tr produced by the electric generator-motor 3.

In addition, Fig. 10 shows the relation between the power generation-motor mode switching timing and the vehicle vibration (G) which was measured at an idling engine speed of 400 rpm.

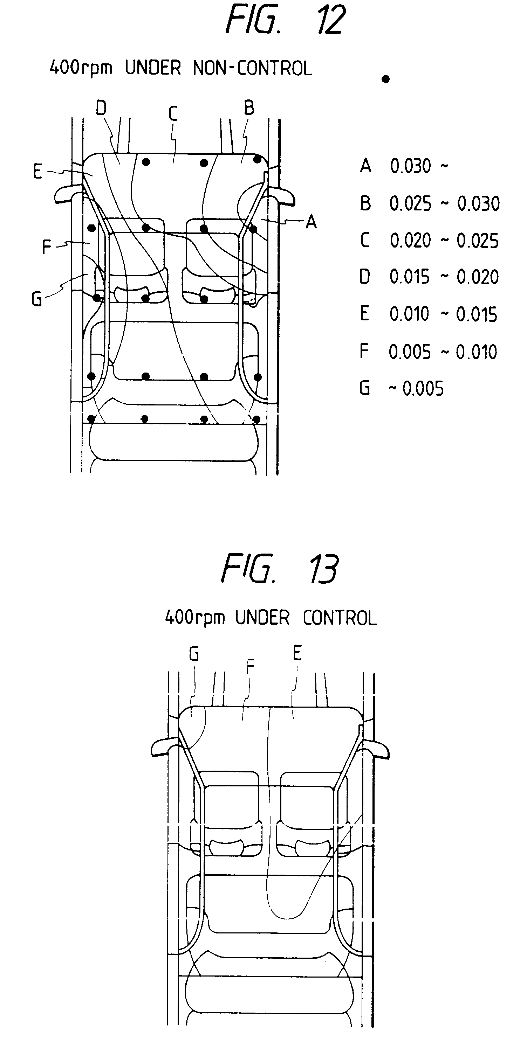

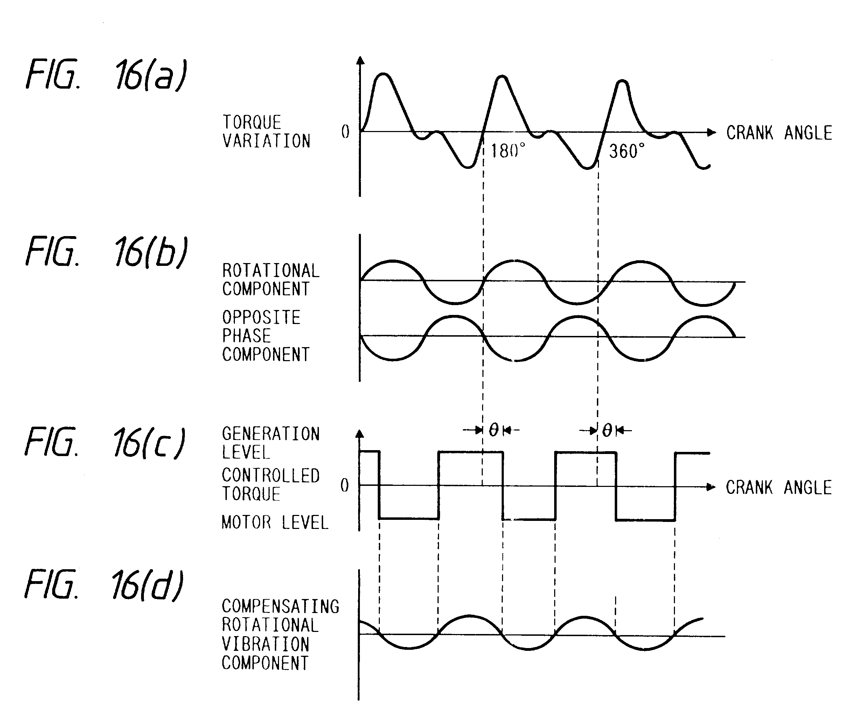

Referring to Figs. 12 to 16(a), (b), (c), and (d), there is shown an eighth embodiment of the invention.

While the above first and second embodiments neglect the vibration transmission lag between the electric generator-motor 3 and the vehicle body, this embodiment is designed to compensate that vibration transmission lag.

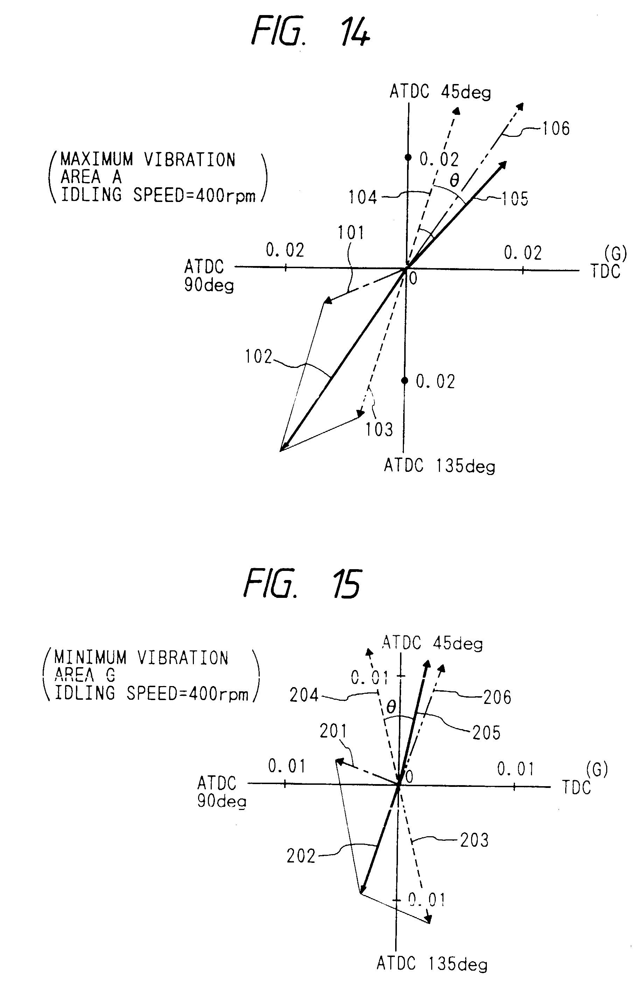

Figs. 12 and 13 show vibration frequency distributions at an idling engine speed of 400 rpm under non-vibration control and vibration control according to this embodiment, respectively. In Fig. 12, black circles (•) show measurement points.

It will be appreciated from Fig. 12 that under the non-vibration control, a vehicle vibration level is maximized in an area A, while it is minimized in an area G, and intermediate vehicle vibration levels appear in areas B to F. It may be due to the fact that the vehicle vibration, as mentioned previously, includes the resultant vibration vector formed with a vertical vibration and a rotational vibration which is out of phase and different in amplitude with and from the vertical vibration, and thus the phase and amplitude of the vehicle vibration is changed at different portions of the vehicle body due to vehicle body-resonating characteristics.

Fig. 14 shows vibration component vectors in the maximum vibration area A, as shown in Fig. 12. As is clear from the drawing, in the maximum vibration area A, the phase difference between a vertical vibration component vector 101 and a rotational vibration component vector 103 is approximately 45 deg. and thus a phase angle therebetween is relatively small so that a resultant vibration vector (i.e., vehicle vibration vector) 102 becomes great.

Fig. 15 illustrates vibration component vectors in the minimum vibration area G, as shown in Fig. 12. It will be noted that a vertical vibration component vector 201 is about 120 deg. out of phase with a rotational vibration component vector 203 and thus a phase angle therebetween is relatively great so that a resultant vibration vector 202 becomes small.

The rotational vibration component vectors 103 and 203 are caused by resonance of a vehicle body with a secondary frequency component of engine speed due to the torque vibration of the engine 1, as shown in Fig. 16(a). On the engine 1 as a source of vibration, a rotational vibration component, as shown in Fig. 16(b), will appear.

The electric generator-motor 3 produces a controlled torque variation, as shown in Fig. 16(c), whose primary frequency component appears as a compensating rotational vibration component in a waveform, as shown in Fig. 16(d). Therefore, when the compensating rotational vibration component is shifted to establish a phase angle of θ relative to an opposite phase frequency component, as shown in Fig. 16(b), which is 180 deg. out of phase with the rotational vibration component, a compensating rotational vibration vector 105 of vehicle vibration in the maximum vibration area A, as shown in Fig. 14, appears with a phase angle of θ relative to a vector 104 in an opposite phase relative to the rotational vibration component vector 103. Similarly, a compensating rotational vibration vector 205 of vehicle vibration in the minimum vibration area G, as shown in Fig. 15, appears with a phase angle of θ relative to a vector 204 in an opposite phase relative to the rotational vibration component vector 203.

It will be noted that the compensating rotational vibration vectors 105 and 205 are oriented at the same angle θ to the rotational vibration component vectors 103 (104) and 203 (204).

This embodiment, as will be described hereinafter in detail, is designed to properly adjust the phase angle θ between the compensating rotational vibration vector of the vehicle vibration (103, 203) and the compensating rotational vibration vectors (105, 205) to reduce the vehicle vibrations uniformly at different portions of the vehicle body.

Referring to Figs. 14 and 15 again, the vector 104, as appreciated above, represents an opposite phase vector which is 180 deg. out of phase with the rotational vibration component vector 103. Similarly, the vector 204 represents an opposite phase vector which is 180 deg. out of phase with the rotational vibration component vector 203. Additionally, the vector 106 is also an opposite phase vector relative to the resultant vector 102 and the vector 206 is an opposite phase vector relative to the resultant vector 202.

Accordingly, as long as the compensating rotational vibration vector 105 is so modified as to be in phase with the opposite vector 106, the resultant vector 102 is minimized in the maximum vibration area A. In the minimum vibration area G, when the compensating rotational vibration vector 205 is so modified as to be in phase with the opposite vector 206, the resultant vector 202 is minimized.

However, when the compensating rotational vibration vector 105 is moved counterclockwise, as viewed in the drawing, into agreement with the opposite vector 106 in order to minimize the vehicle vibration (i.e., the resultant vector 102) in the maximum vibration area A, it will cause the phase angle θ relative to the vector 104 to become small. Thus, the compensating rotational vibration vector 205 is also shifted toward the opposite phase vector 204, thereby causing the phase angle θ to be decreased. This results in the resultant vector 202 not being reduced sufficiently.

Reversely, when the compensating rotational vibration vector 205 is brought into agreement with the opposite phase vector 206 in favor of reduction in vehicle vibration in the minimum vibration area G, it will cause the phase angle θ between the vectors 205 and 204 to become great with the result that the compensating rotational vibration vector 105 in the maximum vibration area A is shifted away from the vector 106, causing the phase angle θ between the vectors 105 and 104 to be increased. Thus, the vehicle vibration (i.e., the resultant vibration vector 102) is not reduced sufficiently.

Accordingly, the vibration damping control system of this embodiment is designed to set the power generation-motor mode switching timing of the electric generator-motor 3 to have a phase angle which is greater than the phase angle θ between the opposite vectors 104 and 106 in the maximum vibration area A and smaller than the phase angle θ between the opposite vectors 204 and 206 in the minimum vibration area G. This adjustment of the power generation-motor mode switching timing does not provide an optimum vibration-damping effect in each of the maximum vibration area A and the minimum vibration area G, but the vehicle vibrations are reduced uniformly at different portions on the vehicle body.

In operation, the vibration damping control system of this embodiment is substantially the same as in the first embodiment, but different therefrom in the contents of a table stored in the ROM 14 for determining in step 108, as shown in Fig. 4, the phase difference (i.e., the phase angle θ) between the primary frequency component and the reference crank angle.

In the table stored in the ROM 14 of this embodiment, as stated above, data for determining the phase difference (i.e., the phase angle θ) between the primary frequency component and the reference crank angle according to engine speed, are stored within a range from the phase angle θ between the opposite phase vectors 104 and 106 in the maximum vibration area A to the phase angle θ between the opposite phase vectors 204 and 206 in the minimum vibration area G.

The phase difference θ within the above range may be set to a phase angle between a resultant of the vectors 106 and 206 and the vector 104.

In addition, the phase difference θ may alternatively be set to a phase angle between an opposite phase vector relative to a rotational vibration component vector and an opposite phase vector relative to a resultant vibration vector of vehicle vibration measured in a specific point in the intermediate-vibration area C. With the vibration damping control based on the phase angle thus determined, on a driver' seat in the intermediate vibration area C, vehicle vibration is reduced to a minimum.

Further, the phase difference θ may be set to a phase angle between an opposite phase vector relative to a rotational vibration component vector and an opposite phase vector relative to a resultant vibration vector of vehicle vibration measured at a specific point in the maximum vibration area A.

A ninth embodiment will be explained below. This embodiment is designed to modify the amplitude of the torque variation produced by the electric generator-motor 3 based on a variation in amplitude of the vehicle vibration.

A vibration damping operation of this embodiment is substantially the same as in the first embodiment, as shown in Fig. 4, but different therefrom only in that in step 108, the amplitude of the controlled torque variation produced by the electric generator-motor 3 is determined in addition to the phase difference.

Likewise to the fourth embodiment, as discussed previously, in step 108, the phase difference and the amplitude are determined, according to the engine speed, by look-up using mapped data showing the relations between the engine speed and the phase difference and between the engine speed and the amplitude, stored in the ROM 14. The amplitude of the controlled torque variation is so defined as to minimize the sum of an amplitude difference between the compensating rotational vibration component vector 105 and the opposite phase vector 106 relative to the resultant vibration vector 102 and an amplitude difference between the compensating rotational vibration component vector 205 and the opposite phase vector 206 relative to the resultant vibration vector 202.

The phase difference θ, as explained in the above eighth embodiment, may alternatively be set to a phase angle between an opposite phase vector relative to a rotational vibration component vector and an opposite phase vector relative to a resultant vibration vector of vehicle vibration measured in a specific point in the intermediate vibration area C. In this case, the electric generator-motor 3 may produce a controlled torque variation to have the compensating rotational vibration component agree with the opposite phase vector relative to the resultant vibration vector of the vehicle vibration in the intermediate vibration area C. With the vibration damping control based on the phase angle and the amplitude thus determined, on a driver' seat in the intermediate vibration area C, the vehicle vibration is reduced to a minimum.

Additionally, the phase difference θ may be set to a phase angle between an opposite phase vector relative to a rotational vibration component vector and an opposite phase vector relative to a resultant vibration vector of vehicle vibration measured at a specific point in the maximum vibration area A. The electric generator-motor 3 may produce a controlled torque variation to have the compensating rotational vibration component agree with the opposite phase vector relative to the resultant vibration vector of the vehicle vibration in the maximum vibration area A.

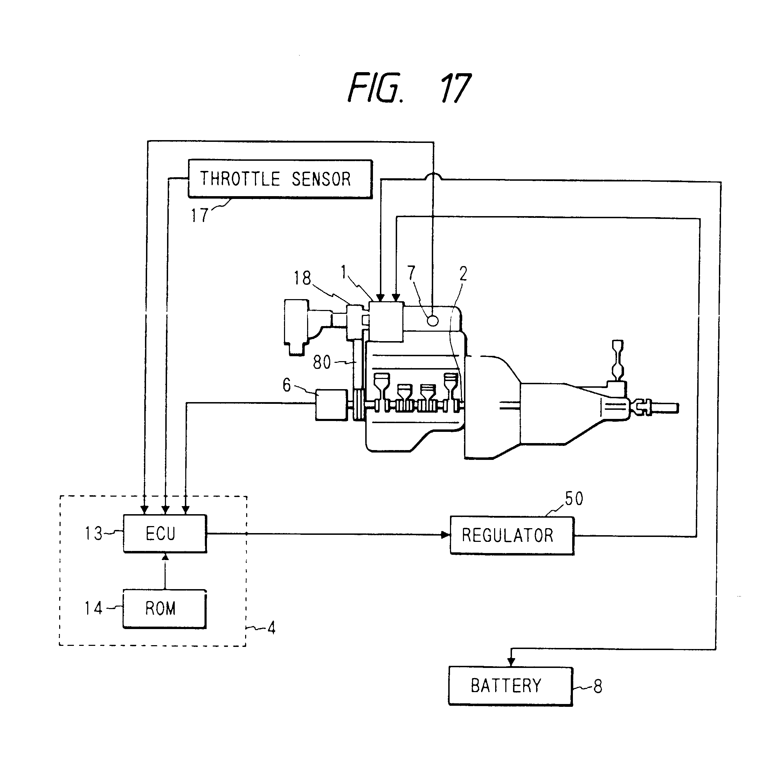

Referring to Fig. 17, there is shown a vibration damping control system according to a tenth embodiment of the invention.

This vibration damping control system is designed to produce a vibration damping torque using an alternator (three phase current generator) 18 in place of the electric generator-motor 3 in the above embodiments. The alternator 18 is commonly in drive connection with the crankshaft 2 through a belt 80, and produces electric energy based on a duty ratio of an exciting pulse signal sent from a regulator 50 to charge the battery 8 for supplying the electric power to some electrical loads such as head lamps or audio system (not shown). Other arrangements and operations are substantially the same as the above embodiments and explanation thereof in detail will be omitted here for the sake of brevity.

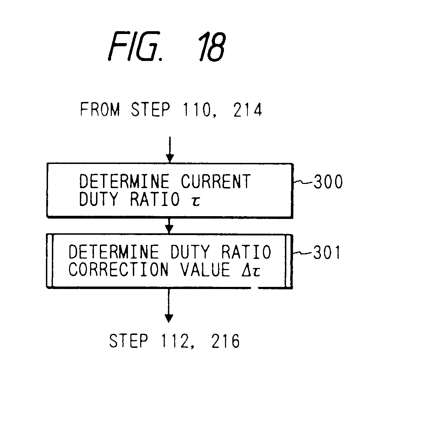

Referring to Fig. 18, a flowchart of logical steps is performed by the operation mode determining device 4.

After step 110 or 214, as shown in Figs. 4 and 7, the routine proceeds to step 300 wherein a current duty ratio τ of the exciting pulse signal output from the regulator 50 under conventional control charging the power in the battery 8, is detected.

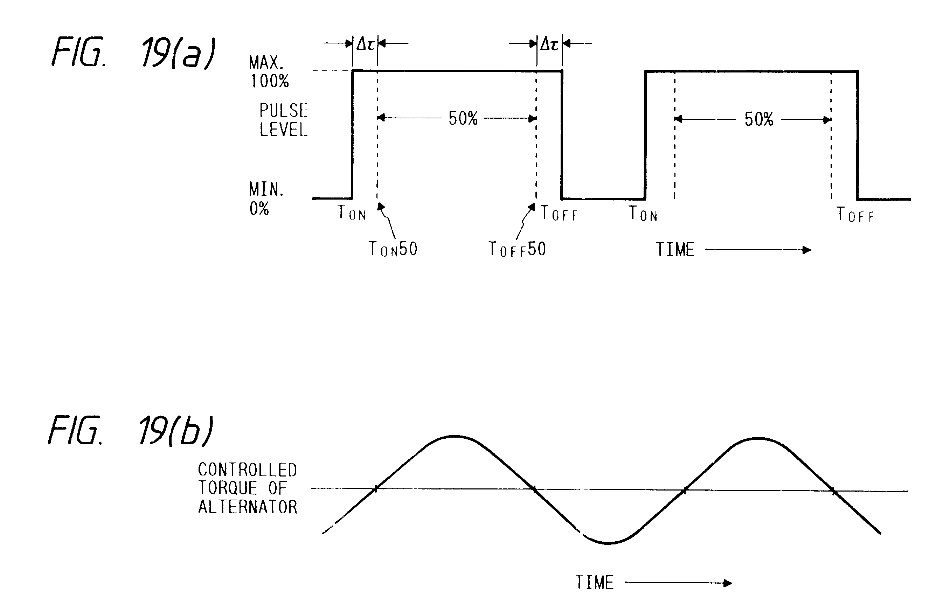

The routine then proceeds to step 301 wherein based on the current duty ratio τ derived in step 300, a rising edge (i.e., power generation-on timing Tₒₙ) and a falling edge (i.e., power generation-off timing T_{off}) of the exciting pulse signal, as shown in Fig. 19(a) are initially determined. Usually, the exciting pulse signal, as appreciated in the drawing, has a duty ratio of more than 50% for charging the battery 8. Subsequently, a duty ratio correction value Δτ is determined according to the relation of Δτ = (τ - 50%) / 2 . The duty ratio correction value Δτ represents a value required for shifting the current duty ratio τ to a duty ratio of 50% of a pulse signal which rises at Tₒₙ₅₀ and falls at T_{off50} to have the magnitudes of positive and negative torques, as shown in Fig. 19(b), be equal to each other.

The routine then proceeds to step 112 or 216 wherein the pulse signal at duty ratio of 50% is applied to the alternator 18 with the power generation-motor mode switching timing T derived in step 110 or 214 so that it produces the torque variation which is 180 deg. out of phase with the primary frequency component of vehicle vibration.

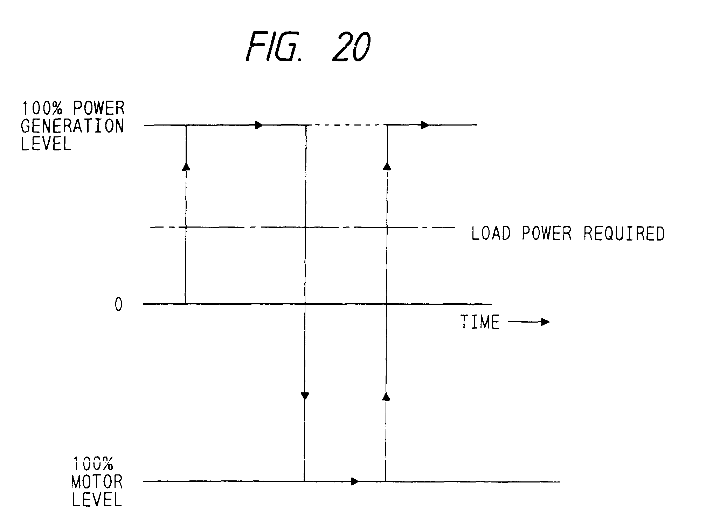

An eleventh embodiment will be described with reference to Figs. 1 and 20.

In the above mentioned first to ninth embodiments, the operation of the electric generator-motor 3 is, as shown in Fig. 16(c), switched between the power generation mode and the motor mode every cycle of 180 deg. with the same level (i.e., amplitude) or controlled so as to produce power-generation and motor voltages in the form of a sine wave or given wave.

Generally, in automotive vehicles, the power of the battery 8 is consumed in activating some electric loads (e.g., head lamps, an audio system). The electric generator-motor 3 also consumes some power of the battery 8 in producing a positive torque in the motor mode. Therefore, when cycles of the power generation mode and the motor mode are set equal to each other, it will cause the positive torque in the motor mode to be reduced in amplitude due to the power consumption in the electric loads of the vehicle. Accordingly, the vibration damping control system of the eleventh embodiment is, as shown in Fig. 20, designed to switch between the power generation mode and the motor mode every cycle of 180 deg. with the same level of 100%, but correct the length of time (i.e., a duty ratio) the electric generator-motor 3 is in the power generation mode so that the quantity of power produced by the power generation operation in one cycle of the power generation mode may become equal to the quantity of power consumed by the motor operation in one cycle of the motor mode plus the quantity of power required for operating the electric loads of the vehicle.

With the above control of the eleventh embodiment, the amplitude of vibration-damping torque variation produced by the electric generator-motor 3 becomes stable. Of course, this embodiment is applicable to the alternator control, as discussed above.

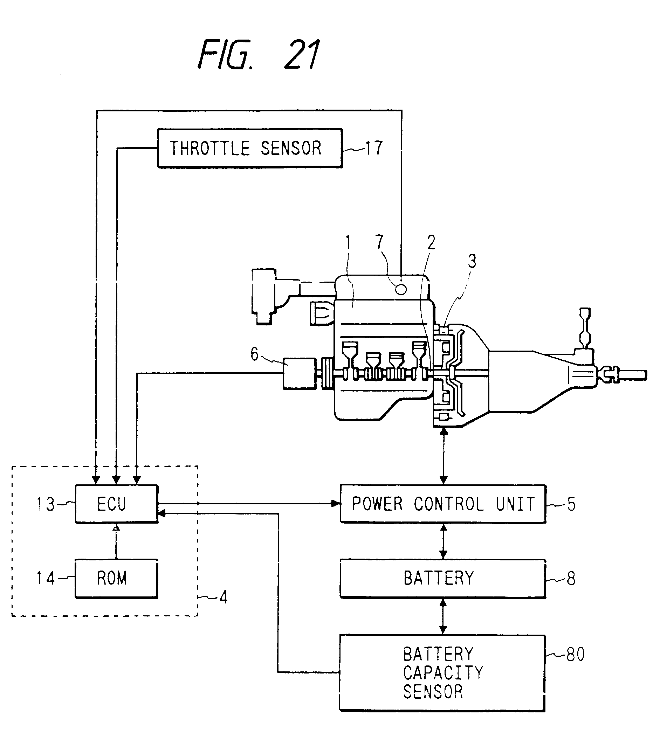

Referring to Fig. 21, there is shown a vibration damping control system according to a twelfth embodiment of the invention.

This vibration damping control system includes a battery capacity sensor 80, and features switching the operation modes of the electric generator-motor 3 based on the capacity of the battery 3. This embodiment may also be applied to the tenth embodiment to switch the operation modes of the alternator 18 based on the capacity of the battery 8.

The electric generator-motor 3, as discussed already, operates between a maximum power generation level and a maximum power consumption level to produce a maximum vibration-damping torque variation. Of course, in the case where the vibration-damping torque required may be small, the electric generator-motor 3 may also operate between smaller power generation and power consumption levels than the maximum power generation and power consumption levels.

In addition, as discussed in the above tenth and eleventh embodiments, a ratio of power generation mode cycle to motor mode cycle (i.e., a duty ratio of a pulse signal applied to the alternator 18) may be modified to create electric energy required for driving some electric loads, which is, in turn, accumulated in the battery 8. In this embodiment, the electric energy created is controlled according to the capacity of the battery 8 in the following manner.

The battery capacity sensor 80 is formed of an electric signal-outputting type of density sensor or otherwise provided with an ampmeter detecting the amount of current flowing between the battery 8 and the power control unit 5. Additionally, it is also desired to project the existing capacity of the battery 8 based on the present input/output current, terminal voltage, and the number of years worked of the battery 8.

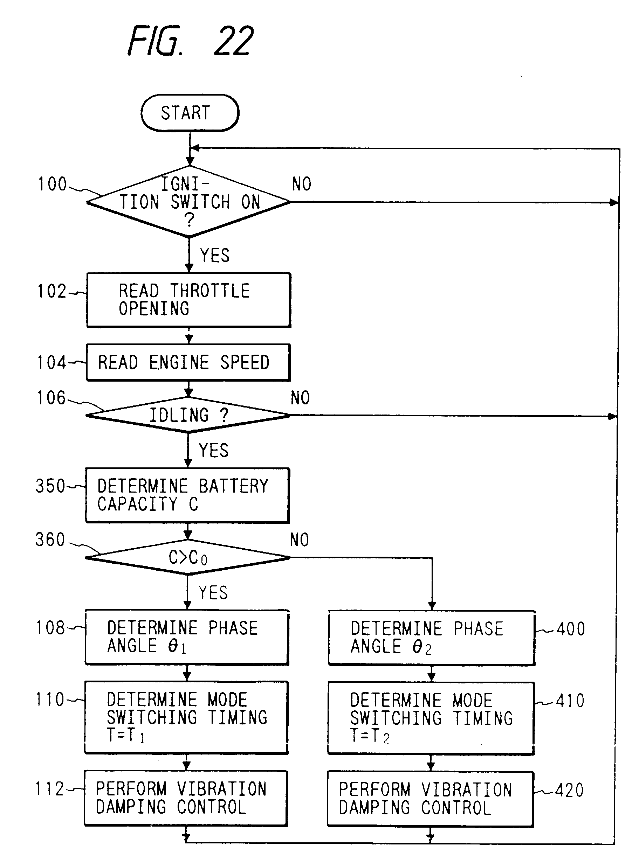

Referring to Fig. 22, there is shown a flowchart according to twelfth embodiment. Steps 101 to 106 are the same as in the above embodiment, and no attempt will be made here to describe them.

After a YES answer is obtained in step 106 concluding that the engine is in the idling mode now, the routine proceeds to step 350 wherein a battery capacity C is determined based on a sensor signal from the battery capacity sensor 80.

The routine then proceeds to step 360 wherein it is determined whether the battery capacity C determined in step 350 is greater than a preselected threshold level C₀ or not. If a YES answer is obtained concluding that there is no need for charging the battery 8, the routine then enters a flow of steps 108 to 112 which are the same as the ones shown in Fig. 4.

Alternatively, if a NO answer is obtained in step 360, concluding that the battery 8 is insufficient in capacity, the routine then proceeds to step 400 wherein a phase angle θ₂ between a torque variation to be produced by the electric generator-motor 3 and the reference crank angle is determined. The phase angle θ₂ is different from the phase angle θ₁ in step 108. This is because changing the power generation-motor mode switching timing in a subsequent step 410 causes torque produced by the electric generator-motor 3 acting on the engine 1 to be changed as compared with the torque produced in step 112, resulting in the primary frequency component of the vehicle vibration being changed in phase.

Subsequently, the routine proceeds to step 410 wherein the power generation-motor mode switching timing T is set to T₂ which is defined to have the cycle time of the power generation mode of the electric generator-motor 3 longer than the cycle time of the motor mode thereof to provide more electric power to the battery 8. This makes it possible to ensure a steady supply of power to another electric load such as head lamps.

The routine then proceeds to step 420 wherein the electric generator-motor is controlled to produce a vibration-compensating torque variation with the power generation-motor mode switching timing. The routine then returns back to step 100.

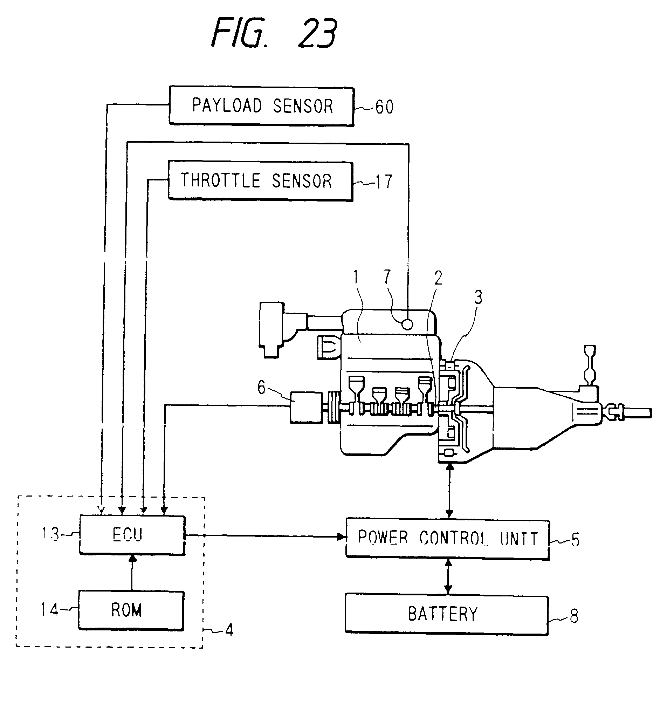

A vibration damping control system according to a thirteenth embodiment of the invention will be described below with reference to Figs. 23 to 25.

The vibration damping control system of this embodiment includes a payload sensor 60 which is so constructed as to monitor vehicle weight or its variation and provides a signal indicative thereof to the operation mode determining device 4 for modifying the power generation-motor mode switching timing T based thereon. The payload sensor 60 may be provided with a conventional stroke sensor which is mounted on a shock absorber.

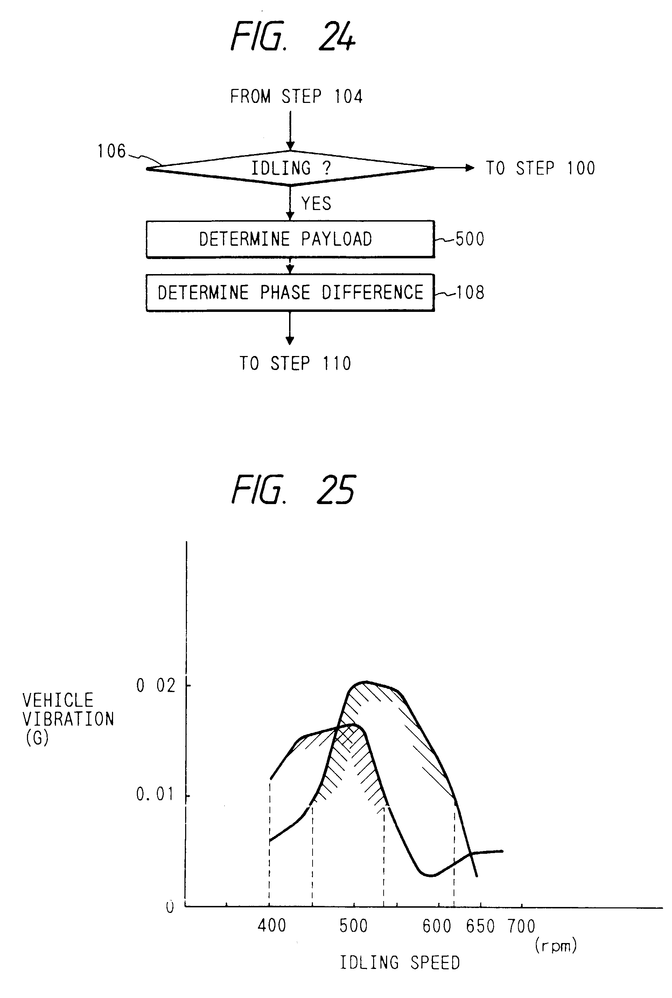

In a flowchart, as shown in Fig. 24, after a YES answer is obtained in step 106 concluding that the engine 1 is in idling operation, the routine then proceeds to step 500 wherein the vehicle weight is determined based on the sensor signal from the payload sensor 60.

Usually, the vehicle vibration will be changed slightly due to the variation in weight of the vehicle, causing a phase angle between the primary frequency component of the vehicle vibration and the reference crank angle to be varied. Fig. 25 shows the relation between a vehicle vibration level (i.e., amplitude) and idling engine speed. Solid lines A and B shows vehicle vibrations in different conditions of vehicle weight.

Accordingly, in this embodiment, the ROM 14 stores therein a three-dimensional table on which data indicating a preselected relation among a variation in vehicle weight, an engine speed, and a phase angle.

After step 500, the routine proceeds to step 108 wherein the phase difference θ (phase angle) is determined by look-up using the table, as mentioned above.

Subsequently, the system performs the same steps as the ones in any one of the embodiments, as mentioned previously. For example, when the vibration damping control system of this embodiment is applied to the fifth embodiment, the primary frequency component of vehicle vibration at a specific point of the vehicle body may be minimized.

Additionally, in the above control routine, for example, determination may be made if the vehicle weight detected by the payload sensor 60 is greater than a preselected threshold value. If so, the same steps 400, 410, and 420 as shown in Fig. 22 are performed. Alternatively, if the vehicle weight is smaller than the preselected threshold value, the same steps 108, 110, and 112 as shown in Fig. 4 are performed.

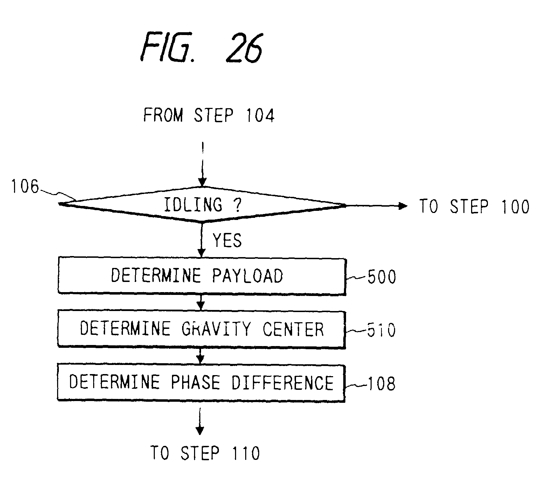

A fourteenth embodiment of the invention will be discussed with reference to Fig. 26, which is a modification of the vibration damping control system of the thirteenth embodiment.

The vibration damping control system of this embodiment includes a plurality of payload sensors one for each suspension of a four-wheel independent suspension system, for example. The ROM 14 stores therein first and second tables. The first table shows mapping data for determining the center of gravity of a vehicle body which will be changed due to a variation in load due to passengers climbing in or out of the vehicle. The second table has mapping data indicating the relation among the phase difference, the center of gravity, and the weight of the vehicle body. The weight of the vehicle body may be determined by averaging values derived by each payload sensor. In addition, on the second table, the relation among the phase difference, the center of gravity, the weight of the vehicle body, and the engine speed may alternatively be mapped.

In Fig. 26, after a YES answer is obtained in step 106 concluding that the engine 1 is in idling operation, the routine then proceeds to step 500 wherein the vehicle weights from all the payload sensors are detected. In step 510, the center of gravity of the vehicle body is determined by look-up using the first table, as mentioned above.

After step 510, the routine proceeds to step 108 wherein the phase difference θ (phase angle) is determined by look-up using the second table, as mentioned above.

Subsequently, the system performs the same steps as the ones in any one of the embodiments, as mentioned previously. For example, when the vibration damping control system of this embodiment is applied to the fifth embodiment, the primary frequency component of vehicle vibration at a specific point of the vehicle body may be minimized.

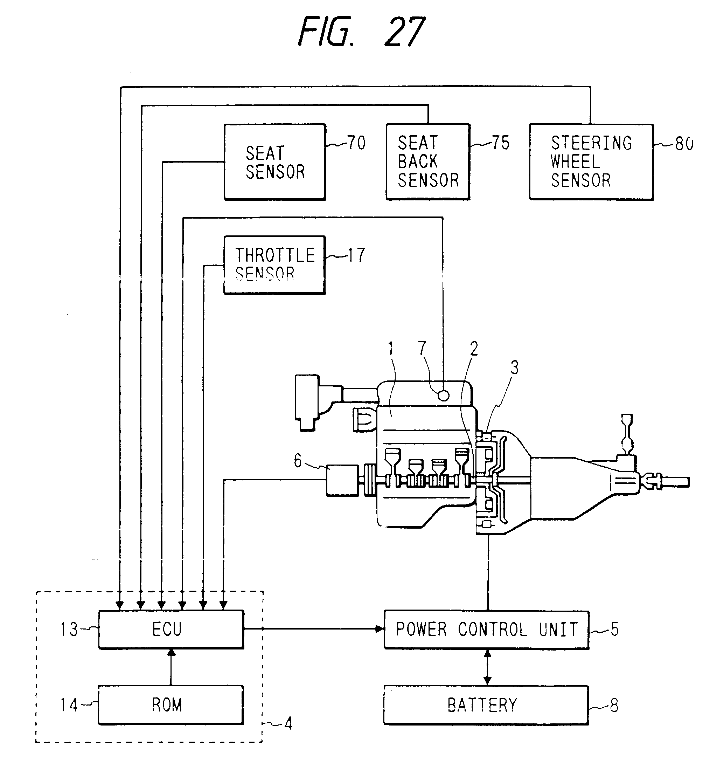

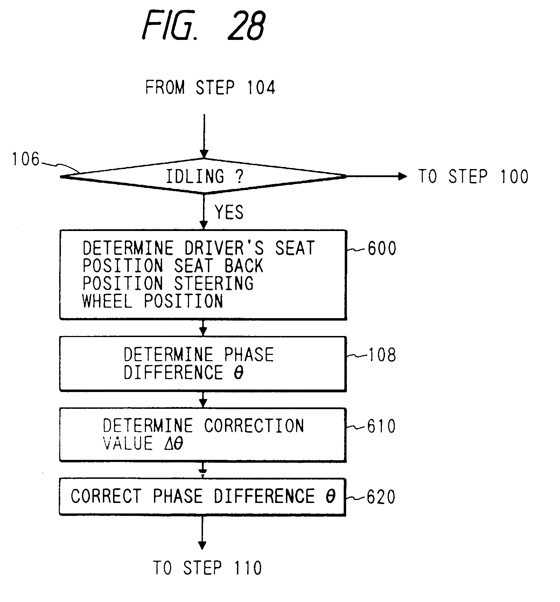

Referring to Figs. 27 and 28, there is shown a vibration damping control system according to a fifteenth embodiment of the invention.

The vibration damping control system of this embodiment includes a driver's seat position sensor 70, a seat back position sensor 75, and a steering wheel position sensor 80. The driver's seat position sensor 70 detects a position of the driver's seat in a longitudinal direction of the vehicle body, and may be provided with front and rear limit switches. The front limit switch is so arranged at a preselected front position on a seat slide rail (not shown), while the rear limit switch is mounted at a given rear position thereon. When both limit switches are in OFF-state, it is concluded that the driver's seat lies in an intermediate range between the front and rear limit switches. The seat back position sensor 75 detects an inclined angle of a seat back of the driver's seat. The steering wheel angle sensor 80 detects an inclined angle of a column of a steering wheel, and may be provided with a single limit switch which is turned on when the column of the steering wheel is inclined over a given angle.

The vibration damping control system of this embodiment is designed to determine the variation in the center of gravity of a vehicle operator, or driver based on sensor signals from the driver's seat position sensor 70, the seat back position sensor 75, and the steering wheel position sensor 80. This is based on the fact that the change in the center of gravity of the driver causes the phase difference and amplitude of the primary frequency component of the vehicle vibration to be changed finely.

Figs. 28 shows part of a flowchart of this embodiment. Steps before 600 and steps after 620 are the same as in the above third embodiment.

After a YES answer is obtained in step 106 concluding that the engine 1 is in idling operation, the routine then proceeds to step 600 wherein the longitudinal driver's seat position, the angular position of the seat back, and the inclined angle of the steering wheel are determined based on sensor signals from the driver's seat position sensor 70, the seat back position sensor 75, and the steering wheel position sensor 80. The routine then proceeds to step 108 wherein the phase difference θ is determined in the same manner as in step 108 in the third embodiment. Subsequently, the routine proceeds to step 610 wherein a phase difference correction value Δθ is determined by looking up data mapped on a table representing the relation among the phase difference correction value Δθ, the longitudinal driver's seat position, the angular position of the seat back, and the inclined angle of the steering wheel. The routine then proceeds to step 620 wherein the phase difference θ derived in step 108 is shifted based on the phase difference correction value.

For example, when the driver is seated forward, a first phase difference correction value Δθ₁ is added to the phase difference θ, while when the driver is seated rearward, a second phase difference correction value Δθ₂ is added to the phase difference θ. When the driver is seated in the middle position, the phase difference θ is not corrected. In addition, a third phase difference correction value Δθ₃ which is derived in a preselected relation to the angular position of the seat back is further added to the phase difference θ. Further, a fourth phase difference correction value Δθ₄ which is derived in a preselected relation to the inclined angle of the steering wheel is also added to the phase difference θ.

It is desired that the first, second, third, and fourth phase difference correction values Δθ₁, Δθ₂, Δθ₃, and Δθ₄ be selected based on experiment data to assume optimal vibration damping effects.

Subsequently, the routine proceeds to step 110 wherein based on the phase difference corrected in step 620, the power generation-motor mode switching timing of selecting between the power generation and the motor modes in the electric generator-motor 3 is determined.

With the above phase difference correction control, vehicle vibration to which the driver is sensitive, is minimized even when the driver assume different positions.

This embodiment is, of course, applicable to any one of the above embodiments. The amplitude of the electric generator-motor 3 may be corrected based on the longitudinal driver's seat position, the angular position of the seat back, and the inclined angle of the steering wheel.

While the present invention has been disclosed in terms of the preferred embodiment in order to facilitate better understanding thereof, it should be appreciated that the invention can be embodied in various ways without departing from the principle of the invention. Therefore, the invention should be understood to include all possible embodiments and modification to the shown embodiments which can be embodied without departing from the principle of the invention as set forth in the appended claims.

## Claims

1. A vehicle powered by an internal combustion engine and provided with a vibration damping control system, the vehicle comprising:
a rotary electric machine (13, 18) operatively connected to the internal combustion engine (1);
crank angle detecting means (6) for detecting a crank angle of the internal combustion engine (1);
engine operating condition detecting means (4, 7, 17) for detecting engine operating condition related to a phase difference between the crank angle detected by said crank angle detecting means (6) and a primary frequency component of vehicle vibration including a resultant vector defined by a rotational vibration component and a vertical vibration component;
operation mode determining means (4) for determining an operation mode of said rotary electric machine (3, 18) based on the engine operating condition detected by said engine operating condition detecting means (4,7,17), and on the basis of a series of pre-established conditions associated with corresponding operation modes, which in turn determine a respective timing sequence for switching the rotary electric machine between power generation mode and motor mode so as to reduce both the rotational vibration component and the vertical vibration component; and controlling means (4, 5) for controlling said rotary electric machine (3, 18) based on the operation mode determined by said operation mode determining means (4).

2. A vehicle powered by an internal combustion engine and provided with a vibration damping control system as set forth in claim 1, wherein said engine operating condition detecting means detects an idling operating condition of the internal combustion engine (1) as the engine operating condition.

3. A vehicle powered by an internal combustion engine and provided with a vibration damping control system as set forth in claim 1, wherein said engine operating condition detecting means detects engine speed of the internal combustion engine (1) as the engine operating condition.

4. A vehicle powered by an internal combustion engine and provided with a vibration damping control system as set forth in claim 1, wherein said engine operating condition detecting means detects engine speed and an opening degree of a throttle valve of the internal combustion engine (1) as the engine operating condition.

5. A vehicle powered by an internal combustion engine and provided with a vibration damping control system as set forth in claim 1, wherein said rotary electric machine (3, 18) provide a torque variation, said operating mode determining means determining a phase difference between the torque variation provided by said rotary electric machine (3, 18) and the crank angle of the internal combustion engine (1) which is required to minimize the primary frequency component of vehicle vibration including the resultant vector formed with the rotational vibration component and the vertical vibration component.

6. A vehicle powered by an internal combustion engine and provided with a vibration damping control system as set forth in claim 1, wherein the primary frequency component includes a primary frequency component at a preselected vibration-exciting portion of the vehicle body, said rotary electric machine (3, 18) providing a torque variation, said operating mode determining means determining a phase difference between the torque variation provided by said rotary electric machine (3, 18) and the crank angle of the internal combustion engine (1) which is required to minimize the primary frequency component at the preselected vibration-exciting portion.

7. A vehicle powered by an internal combustion engine and provided with a vibration damping control system as set forth in claim 1, wherein said rotary electric machine (3, 18) provides a torque variation, said operating mode determining means determining a phase difference between the torque variation provided by said rotary electric machine (3, 18) and the crank angle of the internal combustion engine (1) and an amplitude of the torque variation which are required to minimize the primary frequency component.

8. A vehicle powered by an internal combustion engine and provided with a vibration damping control system as set forth in claim 1, wherein the primary frequency component includes a primary frequency component at a preselected vibration-exciting portion of the vehicle body, said rotary electric machine (3, 18) providing a torque variation, said operating mode determining means determining a phase difference between the torque variation provided by said rotary electric machine (3, 18) and the crank angle of the internal combustion engine (1) and an amplitude of the torque variation which are required to minimize the primary frequency component.

9. A vehicle powered by an internal combustion engine and provided with a vibration damping control system, the vehicle comprising:
a rotary electric machine (3, 18) operatively connected to the internal combustion engine (1);
vibration detecting means (20) for detecting a primary frequency component of vehicle vibration including a resultant vector defined by a rotational vibration component and a vertical vibration component;
operation mode determining means (4) for determining an operation mode of said rotary electric machine (3, 18) based on the engine operating condition detected by engine operating condition detecting means (4,7,17), and on the basis of said primary frequency component of vehicle vibration detected by said vibration detecting means (20), whereupon a respective timing sequence for switching the rotary electric machine between power generation mode and motor mode is determined so as to reduce both the rotational vibration component and the vertical vibration component; and
controlling means (4, 5) for controlling said rotary electric machine (3, 18) based on the operation mode determined by said operation mode determining means (4).

10. A vehicle powered by an internal combustion engine and provided with a vibration damping control system as set forth in claim 9, wherein said rotary electric machine (3, 18) provides a torque variation, said operation mode determining means determining a phase difference between the torque variation provided by said rotary electric machine (3, 18) and a crank angle of the internal combustion engine (1) based on the primary frequency component detected by said vibration detecting means (20), the phase angle being determined to minimize a primary frequency component developed at a preselected vibration-exciting portion of the vehicle body.

11. A vehicle powered by an internal combustion engine and provided with a vibration damping control system as set forth in claim 9, wherein said rotary electric machine (3, 18) provides a torque variation, said operation mode determining means determining an amplitude of the torque variation provided by the rotary electric machine (3, 18) and a phase difference between the torque variation and a crank angle of the internal combustion engine (1) based on the primary frequency component detected by said vibration detecting means (20), the amplitude and the phase angle being determined to minimize a primary frequency component developed at a preselected vibration-exciting portion of the vehicle body.

12. A vehicle powered by an internal combustion engine and provided with a vibration damping control system as set forth in claim 9, wherein said rotary electric machine (3, 18) is provided with an electric generator-motor which establishes transmission of electric energy between the rotary electric machine (3, 18) and battery means (8).

13. A vehicle powered by an internal combustion engine and provided with a vibration damping control system as set forth in claim 9, wherein said rotary electric machine (3, 18) is connected to a flywheel of the internal combustion engine (1) for establishing transmission of torque between the rotary electric machine (3, 18) and the flywheel (90).

14. A vehicle powered by an internal combustion engine and provided with a vibration damping control system as set forth in claim 12, wherein said controlling means (4, 5) switches a power generation mode and a motor mode in said rotary electric machine (3, 18) to provide a vibration damping torque.

15. A vehicle powered by an internal combustion engine and provided with a vibration damping control system as set forth in claim 12, wherein said controlling means (4, 5) controls said rotary electric machine (3, 18) to produce or consume the electric energy within a range from a maximum power generation level to a maximum power consumption level to provide vibration having the same frequency as the primary frequency component for reducing the rotational vibration component and the vertical vibration component.

16. A vehicle powered by an internal combustion engine and provided with a vibration damping control system as set forth in claim 9, wherein said rotary electric machine (3, 18) is provided with an alternating current motor (18), said controlling means (4, 5) controlling the amount of electric energy produced by the alternating current motor.

17. A vehicle powered by an internal combustion engine and provided with a vibration damping control system as set forth in claim 16, wherein said controlling means (4, 5) controls said rotary electric machine (3, 18) to operate within a range from maximum power generation level and a non-power generation level for providing vibration having a frequency vibrating in synchronism with the primary frequency component of the vehicle vibration.

18. A vehicle powered by an internal combustion engine and provided with a vibration damping control system as set forth in claim 9, further comprising vehicle passenger position sensor means (70, 75, 80) for detecting position of a vehicle passenger occupying the vehicle, the operation mode of said rotary electric machine (3, 18) is corrected based on the position of the vehicle passenger.

19. A vehicle powered by an internal combustion engine and provided with a vibration damping control system as set forth in claim 9, further comprising payload sensor means (60) for detecting weight of the vehicle, the operation mode of said rotary electric machine (3, 18) is corrected based on the weight of the vehicle.

20. A vehicle powered by an internal combustion engine and provided with a vibration damping control system as set forth in claim 19, wherein the payload sensor means (60) include a plurality of payload sensors mounted on different portions of the vehicle for determining the center of gravity of the vehicle, the operation mode of said rotary electric machine (3, 18) being further corrected based on the center of gravity of the vehicle.

21. Method of damping vibration in a vehicle powered by an internal combustion engine in a controlled manner, the process comprising the steps of:
determining a phase difference between a crank angle and a primary frequency component of vehicle vibration including a resultant vector (11) defined by a rotational vibration component (10) and a vertical vibration component (9) to provide a timing for torque variations;
applying torque variations to the crank shaft so as to produce a vibration damping vector (15) having the same frequency as the resultant vibration vector (11) in an opposite phase thereto for reducing the vertical vibration component (9) and rotational vehicle vibration component (10).

22. Method of damping vibration in a vehicle powered by an internal combustion engine in a controlled manner as set forth in claim 21, wherein the step of determining a phase difference between a crank angle and a primary frequency component of vehicle vibration comprises the step of determining a crank angle of the engine (1).

23. Method of damping vibration in a vehicle powered by an internal combustion engine in a controlled manner as set forth in claim 22, wherein the step of determining a phase difference between a crank angle and a primary frequency component of vehicle vibration further comprises:
determining engine speed;
determining throttle valve position;
whereby the phase difference between the crank angle and the resultant vector (11) including the rotational (10) and vertical (9) vibration components is determined based on the engine speed and the opening degree of the throttle valve.

24. Method of damping vibration in a vehicle powered by an internal combustion engine in a controlled manner as set forth in claim 22, wherein the step of determining a phase difference between a crank angle and a primary frequency component of vehicle vibration further comprises:
determining engine speed;
whereby the phase difference between a crank angle and a primary frequency component of vehicle vibration is determined according a variation in the engine speed.

25. Method of damping vibration in a vehicle powered by an internal combustion engine in a controlled manner as set forth in claim 22, wherein the step of determining a phase difference between a crank angle and a primary frequency component of vehicle vibration further comprises:
determining a phase angle between resultant vector (11) of the engine (1) and the crank angle at a location where torque variations are applied;
controlling the timing of said torque variations to provide the vibration damping vector (15) in a phase defined in a preselected relation to the phase angle.

26. Method of damping vibration in a vehicle powered by an internal combustion engine in a controlled manner as set forth in claim 22, wherein the step of determining a phase difference between a crank angle and a primary frequency component of vehicle vibration further comprises:
determining an amplitude of the resultant vector (11) including the rotational (10) and vertical (9) vibration components;
controlling the timing of said torque variations to provide the, vibration damping vector (15) in a phase defined in a preselected relation to the phase difference with the amplitude.

27. Method of damping vibration in a vehicle powered by an internal combustion engine in a controlled manner as set forth in claim 22, wherein the step of determining a phase difference between a crank angle and a primary frequency component of vehicle vibration further comprises:
determining engine speed;
determining a phase difference between the crank angle and the torque variation serving to minimize the vehicle vibration generated at a preselected portion of a vehicle body according to engine speed;
determining an amplitude of torque variation serving to minimize the vehicle vibration generated at the preselected portion of a vehicle body according to engine speed.

28. Method of damping vibration in a vehicle powered by an internal combustion engine in a controlled manner as set forth in claim 22, wherein the step of determining a phase difference between a crank angle and a primary frequency component of vehicle vibration further comprises:
determining engine speed;
determining throttle valve position;
determining the phase difference between a crank angle and the torque variation serving to minimize the vehicle vibration according to engine speed and the opening degree of the throttle valve;
determining an amplitude of the torque variation serving to minimize the vehicle vibration based on engine speed and the opening degree of the throttle valve.

29. Method of damping vibration in a vehicle powered by an internal combustion engine in a controlled manner as set forth in claim 22, wherein the step of determining a phase difference between a crank angle and a primary frequency component of vehicle vibration further comprises:
detecting the resultant vector (11) including the rotational (10) and vertical (9) vibration components;
being responsive to the detected resultant vector (11) to correct the timing determined based on the phase difference to reduce the vehicle vibrations.

30. Method of damping vibration in a vehicle powered by an internal combustion engine in a controlled manner as set forth in claim 22, wherein the step of determining a phase difference between a crank angle and a primary frequency component of vehicle vibration further comprises:
defining a first phase difference between a resultant vector (11) including the rotational (10) and vertical (9) vibration components in a maximum vibration area of the vehicle body;
defining a second phase difference between a resultant vector (11) including the rotational (10) and vertical (9) vibration components in a minimum vibration area of the vehicle body;
wherein the step of performing torque variations comprises:
performing the torque variations assuming a phase difference relative to the crank angle which lies in a range from the first to the second phase differences.

31. Method of damping vibration in a vehicle powered by an internal combustion engine in a controlled manner as set forth in claim 30, wherein in the step of performing torque variations an amplitude of the torque variations is set to minimize the sum of an amplitude difference between the rotational (10) vibration component and a resultant vector (11) including the rotational (10) and vertical (9) vibration components in the maximum vibration area and an amplitude difference between the rotational (10) vibration component and a resultant vector (11) including the rotational (10) and vertical (9) vibration components in the minimum vibration area.

32. Method of damping vibration in a vehicle powered by an internal combustion engine in a controlled manner as set forth in claim 21, wherein the step of determining a phase difference between a crank angle and a primary frequency component of vehicle vibration further comprises:
controlling the timing to provide the vibration to the engine (1) which is in the phase defined in the preselected relation to the phase difference;
wherein the step of performing torque variations comprises:
performing the torque variations by using part of engine torque at a given operation to produce electrical energy.

33. Method of damping vibration in a vehicle powered by an internal combustion engine in a controlled manner as set forth in claim 21, wherein in the step of performing torque variations the torque variations are performed by a rotary electric machine (3,18) by switching power generation mode and motor mode, the power generation mode being to transform part of engine torque into electrical energy, the motor mode being to provide an additional torque to the engine (1);
wherein the step of determining a phase difference between a crank angle and a primary frequency component of vehicle vibration further comprises:
controlling switching timing between the power generation mode and the motor mode to have the rotary electric machine (3,18) produce the electrical energy required to ensure electrical energy consumed in a given electrical load of the vehicle.

34. Method of damping vibration in a vehicle powered by an internal combustion engine in a controlled manner as set forth in claim 33, wherein the step of determining a phase difference between a crank angle and a primary frequency component of vehicle vibration further comprises:
controlling the switching timing between the power generation mode and the motor mode according to a capacity of a battery (8) mounted in the vehicle.

35. Method of damping vibration in a vehicle powered by an internal combustion engine in a controlled manner as set forth in claim 21, wherein the step of determining a phase difference between a crank angle and a primary frequency component of vehicle vibration further comprises:
detecting a variation in weight of the vehicle for correcting the phase difference between engine revolution and frequency of the vehicle vibrations based on the variation in weight of the vehicle.

36. Method of damping vibration in a vehicle powered by an internal combustion engine in a controlled manner as set forth in claim 35, wherein the step of determining a phase difference between a crank angle and a primary frequency component of vehicle vibration further comprises:
determining the center of gravity of the vehicle for further correcting the phase difference between the engine revolution and the frequency of the vehicle vibrations based on the center of gravity.

37. Method of damping vibration in a vehicle powered by an internal combustion engine in a controlled manner as set forth in claim 21, wherein the step of determining a phase difference between a crank angle and a primary frequency component of vehicle vibration further comprises:
detecting position of a vehicle passenger occupying the vehicle for correcting the phase difference between engine revolution and the frequency Method of the vehicle vibrations based on the position of the vehicle passenger.

## Patentansprüche

1. Fahrzeug, das durch eine Brennkraftmaschine mit innerer Verbrennung angetrieben wird und mit einem Regelungssystem zur Vibrationsdämpfung versehen ist, wobei das Fahrzeug aufweist:
eine elektrische Rotationsmaschine (13,18), die mit der Brennkraftmaschine (1) mit innerer Verbrennung funktionell verbunden ist;
Kurbelwinkelerfassungseinrichtung (6) zum Erfassen eines Kurbelwinkels der Brennkraftmaschine (1) mit innerer Verbrennung;
Erfassungseinrichtung (4,7,17) für den Betriebszustand der Brennkraftmaschine zum Erfassen eines Brennkraftmaschinenbetriebszustands bezüglich einer Phasendifferenz zwischen dem von der Kurbelwinkelerfassungseinrichtung (6) erfaßten Kurbelwinkel und einer Hauptfrequenzkomponente einer Fahrzeugvibration, die einen resultierenden Vektor umfaßt, der durch eine Rotationsvibrationskomponente und eine Vertikalvibrationskomponente definiert ist;
Betriebsmodusbestimmungseinrichtung (4) zum Bestimmen eines Betriebsmodus der elektrischen Rotationsmaschine (3,18) auf der Grundlage des von oder Erfassungseinrichtung (4,7,17) für den Betriebszustand der Brennkraftmaschine erfaßten Brennkraftmaschinenbetriebszustands und auf der Grundlage einer Reihe von voreingestellten Bedingungen, die mit entsprechenden Betriebsmodi verknüpft sind, die wiederum einen jeweiligen Zeitablauf zum Umschalten der elektrischen Rotationsmaschine zwischen einem Energieerzeugungsmodus und einem Motormodus bestimmen, um sowohl die Rotationsvibrationskomponente als auch die Vertikalvibrationskomponente zu verringern; und
eine Steuerungseinrichtung (4,5) zum Steuern der elektrischen Rotationsmaschine (3,18) auf der Grundlage des Betriebsmodus, der von der Betriebsmodusbestimmungseinrichtung (4) bestimmt wird.

2. Fahrzeug, das durch eine Brennkraftmaschine mit innerer Verbrennung angetrieben wird und mit einem Regelungssystem zur Vibrationsdämpfung versehen ist, nach Anspruch 1, worin die Erfassungseinrichtung (4,7,17) für den Betriebszustand der Brennkraftmaschine einen Leerlaufbetriebszustand der Brennkraftmaschine (1) mit innerer Verbrennung als den Brennkraftmaschinenbetriebszustand erfaßt.

3. Fahrzeug, das durch eine Brennkraftmaschine mit innerer Verbrennung angetrieben wird und mit einem Regelungssystem zur Vibrationsdämpfung versehen ist, nach Anspruch 1, worin die Erfassungseinrichtung (4,7,17) für den Betriebszustand der Brennkraftmaschine eine Brennkraftmaschinendrehzahl der Brennkraftmaschine (1) mit innerer Verbrennung als den Brennkraftmaschinenbetriebszustand erfaßt.

4. Fahrzeug, das durch eine Brennkraftmaschine mit innerer Verbrennung angetrieben wird und mit einem Regelungssystem zur Vibrationsdämpfung versehen ist, nach Anspruch 1, worin die Erfassungseinrichtung (4,7,17) für den Betriebszustand der Brennkraftmaschine eine Brennkraftmaschinendrehzahl und einen Öffnungsgrad eines Drosselventils der Brennkraftmaschine (1) mit innerer Verbrennung als den Brennkraftmaschinenbetriebszustand erfaßt.

5. Fahrzeug, das durch eine Brennkraftmaschine mit innerer Verbrennung angetrieben wird und mit einem Regelungssystem zur Vibrationsdämpfung versehen ist, nach Anspruch 1, worin die elektrische Rotationsmaschine (3,18) eine Drehmomentschwankung bereitstellt, wobei die Betriebsmodusbestimmungseinrichtung eine Phasendifferenz zwischen der von der elektrischen Rotationsmaschine (3,18) bereitgestellten Drehmomentschwankung und dem Kurbelwinkel der Brennkraftmaschine (1) mit innerer Verbrennung bestimmt, die erforderlich ist, um die Hauptfrequenzkomponente der Fahrzeugvibration, die den resultierenden Vektor umfaßt, der von die Rotationsvibrationskomponente und die Vertikalvibrationskomponente gebildet wird, zu minimieren.

6. Fahrzeug, das durch eine Brennkraftmaschine mit innerer Verbrennung angetrieben wird und mit einem Regelungssystem zur Vibrationsdämpfung versehen ist, nach Anspruch 1, worin die Hauptfrequenzkomponente eine Hauptfrequenzkomponente bei einem vorgewählten Vibrationsanregungsabschnitt des Fahrzeugkörpers umfaßt, wobei die elektrische Rotationsmaschine (3,18) eine Drehmomentschwankung bereitstellt, und wobei die Betriebsmodusbestimmungseinrichtung eine Phasendifferenz zwischen der Drehmomentschwankung, die von der elektrischen Rotationsmaschine (3,18) bereitgestellt wird, und dem Kurbelwinkel der Brennkraftmaschine (1) mit innerer Verbrennung bestimmt, die erforderlich ist, um die Hauptfrequenzkomponente bei dem vorgewählten Vibrationsanregungsabschnitt zu minimieren.

7. Fahrzeug, das durch eine Brennkraftmaschine mit innerer Verbrennung angetrieben wird und mit einem Regelungssystem zur Vibrationsdämpfung versehen ist, nach Anspruch 1, worin die elektrische Rotationsmaschine (3,18) eine Drehmomentschwankung bereitstellt, wobei Betriebsmodusbestimmungseinrichtung eine Phasendifferenz zwischen der Drehmomentschwankung, die von der elektrischen Rotationsmaschine (3,18) bereitgestellt wird, und dem Kurbelwinkel der Brennkraftmaschine (1) mit innerer Verbrennung und eine Amplitude der Drehmomentschwankung bestimmt, die erforderlich sind, um die Hauptfrequenzkomponente zu minimieren.

8. Fahrzeug, das durch eine Brennkraftmaschine mit innerer Verbrennung angetrieben wird und mit einem Regelungssystem zur Vibrationsdämpfung versehen ist, nach Anspruch 1, worin die Hauptfrequenzkomponente eine Hauptfrequenzkomponente bei einem vorgewählten Vibrationsanregungsabschnitt umfaßt, wobei die elektrische Rotationsmaschine (3,18) eine Drehmomentschwankung bereitstellt, und wobei Betriebsmodusbestimmungseinrichtung eine Phasendifferenz zwischen der Drehmomentschwankung, die von der elektrischen Rotationsmaschine (3,18) bereitgestellt wird, und dem Kurbelwinkel der Brennkraftmaschine (1) mit innerer Verbrennung und eine Amplitude der Drehmomentschwankung bestimmt, die erforderlich sind, um die Hauptfrequenzkomponente zu minimieren.

9. Fahrzeug, das durch eine Brennkraftmaschine mit innerer Verbrennung angetrieben wird und mit einem Regelungssystem zur Vibrationsdämpfung versehen ist, wobei das Fahrzeug aufweist:
eine elektrische Rotationsmaschine (13,18), die mit der Brennkraftmaschine (1) mit innerer Verbrennung funktionell verbunden ist;
Vibrationserfassungseinrichtung (20) zum Erfassen einer Hauptfrequenzkomponente einer Fahrzeugvibration, die einen resultierenden Vektor umfaßt, der durch eine Rotationsvibrationskomponente und eine Vertikalvibrationskomponente definiert ist;
Betriebsmodusbestimmungseinrichtung (4) zum Bestimmen eines Betriebsmodus der elektrischen Rotationsmaschine (3,18) auf der Grundlage des von einer Erfassungseinrichtung (4,7,17) für den Betriebszustand der Brennkraftmaschine erfaßten Brennkraftmaschinenbetriebszustands und auf der Grundlage der von der Vibrationserfassungseinrichtung (20) erfaßten Hauptfrequenzkomponente der Fahrzeugvibration, woraufhin ein jeweiliger Zeitablauf zum Umschalten der elektrischen Rotationsmaschine zwischen einem Energieerzeugungsmodus und einem Motormodus bestimmt wird, um somit sowohl die Rotationsvibrationskomponente als auch die Vertikalvibrationskomponente zu verringern; und
eine Steuerungseinrichtung (4,5) zum Steuern der elektrischen Rotationsmaschine (3,18) auf der Grundlage des Betriebsmodus, der von der Betriebsmodusbestimmungseinrichtung (4) bestimmt wird.

10. Fahrzeug, das durch eine Brennkraftmaschine mit innerer Verbrennung angetrieben wird und mit einem Regelungssystem zur Vibrationsdämpfung versehen ist, nach Anspruch 9, worin die elektrische Rotationsmaschine (3,18) eine Drehmomentschwankung bereitstellt, wobei die Betriebsmodusbestimmungseinrichtung eine Phasendifferenz zwischen der von der elektrischen Rotationsmaschine (3,18) bereitgestellten Drehmomentschwankung und einem Kurbelwinkel der Brennkraftmaschine (1) mit innerer Verbrennung auf der Grundlage der von der Vibrationserfassungseinrichtung erfaßten Hauptfrequenzkomponente bestimmt, wobei der Phasenwinkel derart bestimmt wird, um die Hauptfrequenzkomponente, die bei einem vorgewählten Vibrationsanregungsabschnitt des Fahrzeugkörpers erzeugt wird, zu minimieren.

11. Fahrzeug, das durch eine Brennkraftmaschine mit innerer Verbrennung angetrieben wird und mit einem Regelungssystem zur Vibrationsdämpfung versehen ist, nach Anspruch 9, worin die elektrische Rotationsmaschine (3,18) eine Drehmomentschwankung bereitstellt, wobei die Betriebsmodusbestimmungseinrichtung eine Amplitude der Drehmomentschwankung, die von der elektrischen Rotationsmaschine (3,18) bereitgestellt wird, und eine Phasendifferenz zwischen der Drehmomentschwankung und einem Kurbelwinkel der Brennkraftmaschine (1) mit innerer Verbrennung auf der Grundlage der von der Vibrationserfassungseinrichtung (20) erfaßten Hauptfrequenzkomponente bestimmt, wobei die Amplitude und der Phasenwinkel derart bestimmt werden, um die Hauptfrequenzkomponente, die bei einem vorgewählten Vibrationsanregungsabschnitt des Fahrzeugkörpers erzeugt wird, zu minimieren.

12. Fahrzeug, das durch eine Brennkraftmaschine mit innerer Verbrennung angetrieben wird und mit einem Regelungssystem zur Vibrationsdämpfung versehen ist, nach Anspruch 9, worin die elektrische Rotationsmaschine (3,18) mit einem elektrischen Generator-Motor versehen ist, der eine Übertragung von elektrischer Energie zwischen der elektrische Rotationsmaschine (3,18) und einer Batterieeinrichtung (8) vorsieht.

13. Fahrzeug, das durch eine Brennkraftmaschine mit innerer Verbrennung angetrieben wird und mit einem Regelungssystem zur Vibrationsdämpfung versehen ist, nach Anspruch 9, worin die elektrische Rotationsmaschine (3,18) mit einem Schwungrad der Brennkraftmaschine (1) mit innerer Verbrennung verbunden ist, um eine Übertragung eines Drehmoments zwischen der elektrischen Rotationsmaschine (3,18) und dem Schwungrad (90) vorzusehen.

14. Fahrzeug, das durch eine Brennkraftmaschine mit innerer Verbrennung angetrieben wird und mit einem Regelungssystem zur Vibrationsdämpfung versehen ist, nach Anspruch 12, worin die Steuerungseinrichtung (4,5) einen Energieerzeugungsmodus und einen Motormodus in der elektrischen Rotationsmaschine (3,18) umschaltet, um ein Vibrationsdämpfungsdrehmoment bereitzustellen.

15. Fahrzeug, das durch eine Brennkraftmaschine mit innerer Verbrennung angetrieben wird und mit einem Regelungssystem zur Vibrationsdämpfung versehen ist, nach Anspruch 12, worin die Steuerungseinrichtung (4,5) die elektrische Rotationsmaschine (3,18) derart steuert, um die elektrische Energie innerhalb eines Bereichs von einem Maximalenergieerzeugungsniveau zu einem Maximalenergieverbrauchsniveau zu erzeugen oder zu verbrauchen, um eine Vibration bereitzustellen, die die gleiche Frequenz wie die Hauptfrequenzkomponente aufweist, um die Rotationsvibrationskomponente und die Vertikalvibrationskomponente zu verringern.

16. Fahrzeug, das durch eine Brennkraftmaschine mit innerer Verbrennung angetrieben wird und mit einem Regelungssystem zur Vibrationsdämpfung versehen ist, nach Anspruch 9, worin die elektrische Rotationsmaschine (3,18) mit einem Wechselstrommotor (18) versehen ist, wobei die Steuerungseinrichtung (4,5) den Betrag von elektrischer Energie, die durch den Wechselstrommotor erzeugt wird, steuert.

17. Fahrzeug, das durch eine Brennkraftmaschine mit innerer Verbrennung angetrieben wird und mit einem Regelungssystem zur Vibrationsdämpfung versehen ist, nach Anspruch 16, worin die Steuerungseinrichtung (4,5) die elektrische Rotationsmaschine (3,18) derart steuert, um innerhalb eines Bereichs von einem Maximalenergieerzeugungsniveau und einem Nicht-Energieerzeugungsniveau zu arbeiten, um eine Vibration bereitzustellen, die eine Frequenz aufweist, welche synchronisiert mit der Hauptfrequenzkomponente der Fahrzeugvibration vibriert.

18. Fahrzeug, das durch eine Brennkraftmaschine mit innerer Verbrennung angetrieben wird und mit einem Regelungssystem zur Vibrationsdämpfung versehen ist, nach Anspruch 9, worin das Fahrzeug ferner eine Fahrzeuginsassenpositionssensoreinrichtung (70,75,80) zum Erfassen einer Position eines Fahrzeuginsassen, der in dem Fahrzeug sitzt, aufweist, wobei der Betriebsmodus der elektrischen Rotationsmaschine (3,18) auf der Grundlage der Position des Fahrzeuginsassen korrigiert wird.

19. Fahrzeug, das durch eine Brennkraftmaschine mit innerer Verbrennung angetrieben wird und mit einem Regelungssystem zur Vibrationsdämpfung versehen ist, nach Anspruch 9, worin das Fahrzeug ferner eine Nutzlastsensoreinrichtung (60) zum Bestimmen des Gewichts des Fahrzeugs aufweist, wobei der Betriebsmodus der elektrischen Rotationsmaschine (3,18) auf der Grundlage des Gewichts des Fahrzeugs korrigiert wird.

20. Fahrzeug, das durch eine Brennkraftmaschine mit innerer Verbrennung angetrieben wird und mit einem Regelungssystem zur Vibrationsdämpfung versehen ist, nach Anspruch 19, worin die Nutzlastsensoreinrichtung (60) eine Vielzahl von Nutzlastsensoren umfaßt, die an verschiedenen Abschnitten des Fahrzeugs zum Bestimmen des Gravitationszentrums des Fahrzeugs montiert sind, wobei der Betriebsmodus der elektrischen Rotationsmaschine (3,18) ferner auf der Grundlage des Gravitaionszentrums des Fahrzeugs korrigiert wird.

21. Verfahren zum geregelten Dämpfen einer Vibration in einem Fahrzeug, das durch eine Brennkraftmaschine mit innerer Verbrennung angetrieben wird, wobei das Verfahren aufweist:
Bestimmen einer Phasendifferenz zwischen einem Kurbelwinkel und einer Hauptfrequenzkomponente einer Fahrzeugvibration, die einen resultierenden Vektor (11) aufweist, der durch eine Rotationsvibrationskomponente (10) und eine Vertikalvibrationskomponente (9) definiert ist, um einen Zeitablauf für Drehmomentschwankungen bereitzustellen;
Anwenden von Drehmomentschwankungen auf die Kurbelwelle, um somit einen Vibrationsdämpfungsvektor (15) zu erzeugen, der die gleiche Frequenz wie der resultierende Vibrationsvektor (11) in einer entgegengesetzten Phase zu diesem aufweist, um die Vertikalvibrationskomponente (9) und die Rotationsfahrzeugsvibrationskomponente (10) zu verringern.

22. Verfahren zum geregelten Dämpfen einer Vibration in einem Fahrzeug, das durch eine Brennkraftmaschine mit innerer Verbrennung angetrieben wird, nach Anspruch 21, worin der Schritt des Bestimmens einer Phasendifferenz zwischen einem Kurbelwinkel und einer Hauptfrequenzkomponente der Fahrzeugvibration den Schritt des Bestimmens eines Kurbelwinkels der Brennkraftmaschine (1) aufweist.

23. Verfahren zum geregelten Dämpfen einer Vibration in einem Fahrzeug, das durch eine Brennkraftmaschine mit innerer Verbrennung angetrieben wird, nach Anspruch 22, worin der Schritt des Bestimmens einer Phasendifferenz zwischen einem Kurbelwinkel und einer Hauptfrequenzkomponente der Fahrzeugvibration ferner aufweist:
Bestimmen einer Brennkraftmaschinendrehzahl;
Bestimmen einer Drosselventilposition;
wodurch die Phasendifferenz zwischen dem Kurbelwinkel und dem resultierenden Vektor (11), der die Rotations- (10) und Vertikal-(9)-vibrationskomponenten umfaßt, auf der Grundlage der Brennkraftmaschinendrehzahl und dem Öffnungsgrad des Drosselventils bestimmt wird.

24. Verfahren zum geregelten Dämpfen einer Vibration in einem Fahrzeug, das durch eine Brennkraftmaschine mit innerer Verbrennung angetrieben wird, nach Anspruch 22, worin der Schritt des Bestimmens einer Phasendifferenz zwischen einem Kurbelwinkel und einer Hauptfrequenzkomponente der Fahrzeugvibration ferner aufweist:
Bestimmen einer Brennkraftmaschinendrehzahl;
wodurch die Phasendifferenz zwischen einem Kurbelwinkel und einer Hauptfrequenzkomponente der Fahrzeugvibration gemäß einer Schwankung bezüglich der Brennkraftmaschinendrehzahl bestimmt wird.

25. Verfahren zum geregelten Dämpfen einer Vibration in einem Fahrzeug, das durch eine Brennkraftmaschine mit innerer Verbrennung angetrieben wird, nach Anspruch 22, worin der Schritt des Bestimmens einer Phasendifferenz zwischen einem Kurbelwinkel und einer Hauptfrequenzkomponente der Fahrzeugvibration ferner aufweist:
Bestimmen eines Phasenwinkels zwischen dem resultierenden Vektor (11) der Brennkraftmaschine (1) und dem Kurbelwinkel an einem Ort, an dem die Anwendung mit Drehmomentschwankungen stattfindet;
Steuern des Zeitablaufs der Drehmomentschwankungen, um den Vibrationsdämpfungsvektor (15) in einer Phase bereitzustellen, die in einer vorgewählten Beziehung bezüglich des Phasenwinkels definiert ist.

26. Verfahren zum geregelten Dämpfen einer Vibration in einem Fahrzeug, das durch eine Brennkraftmaschine mit innerer Verbrennung angetrieben wird, nach Anspruch 22, worin der Schritt des Bestimmens einer Phasendifferenz zwischen einem Kurbelwinkel und einer Hauptfrequenzkomponente der Fahrzeugvibration ferner aufweist:
Bestimmen einer Amplitude des resultierenden Vektors (11), der die Rotations- (10) und Vertikal-(9)-Vibrationskomponente umfaßt;
Steuern des Zeitablaufs der Drehmomentschwankungen, um den Vibrationsdämpfungsvektor (15) in einer Phase, die in einer vorgewählten Beziehung bezüglich der Phasendifferenz definiert ist, mit der Amplitude bereitzustellen.

27. Verfahren zum geregelten Dämpfen einer Vibration in einem Fahrzeug, das durch eine Brennkraftmaschine mit innerer Verbrennung angetrieben wird, nach Anspruch 22, worin der Schritt des Bestimmens einer Phasendifferenz zwischen einem Kurbelwinkel und einer Hauptfrequenzkomponente der Fahrzeugvibration ferner aufweist:
Bestimmen einer Brennkraftmaschinendrehzahl;
Bestimmen einer Phasendifferenz zwischen dem Kurbelwinkel und der Drehmomentschwankung, die dazu dient, die Fahrzeugvibration, die an einem vorgewählten Abschnitt eines Fahrzeugkörpers erzeugt wird, gemäß der Brennkraftmaschinendrehzahl zu minimieren;
Bestimmen einer Amplitude der Drehmomentschwankung, die dazu dient, die Fahrzeugvibration, die an einem vorgewählten Abschnitt eines Fahrzeugkörpers erzeugt wird, gemäß der Brennkraftmaschinendrehzahl zu minimieren.

28. Verfahren zum geregelten Dämpfen einer Vibration in einem Fahrzeug, das durch eine Brennkraftmaschine mit innerer Verbrennung angetrieben wird, nach Anspruch 22, worin der Schritt des Bestimmens einer Phasendifferenz zwischen einem Kurbelwinkel und einer Hauptfrequenzkomponente der Fahrzeugvibration ferner aufweist:
Bestimmen einer Brennkraftmaschinendrehzahl;
Bestimmen einer Drosselventilposition;
Bestimmen der Phasendifferenz zwischen einem Kurbelwinkel und der Drehmomentschwankung, die dazu dient, die Fahrzeugvibration, die an einem vorgewählten Abschnitt eines Fahrzeugkörpers erzeugt wird, gemäß der Brennkraftmaschinendrehzahl und des Öffnungsgrades des Drosselventils zu minimieren;
Bestimmen einer Amplitude der Drehmomentschwankung, die dazu dient, die Fahrzeugvibration auf der Grundlage der Brennkraftmaschinendrehzahl und des Öffnungsgrades des Drosselventils zu minimieren.

29. Verfahren zum geregelten Dämpfen einer Vibration in einem Fahrzeug, das durch eine Brennkraftmaschine mit innerer Verbrennung angetrieben wird, nach Anspruch 22, worin der Schritt des Bestimmens einer Phasendifferenz zwischen einem Kurbelwinkel und einer Hauptfrequenzkomponente der Fahrzeugvibration ferner aufweist:
Erfassen des resultierenden Vektors (11), der die Rotations- (10) und die Vertikal-(9)-Vibrationskomponente umfaßt;
Reagieren auf den erfaßten resultierenden Vektor (11), um den Zeitablauf, der auf der Grundlage der Phasendifferenz bestimmt wird, derart zu korrigieren, um die Fahrzeugvibrationen zu verringern.

30. Verfahren zum geregelten Dämpfen einer Vibration in einem Fahrzeug, das durch eine Brennkraftmaschine mit innerer Verbrennung angetrieben wird, nach Anspruch 22, worin der Schritt des Bestimmens einer Phasendifferenz zwischen einem Kurbelwinkel und einer Hauptfrequenzkomponente der Fahrzeugvibration ferner aufweist:
Definieren einer ersten Phasendifferenz zwischen einem resultierenden Vektor (11), der die Rotations- (10) und die Vertikal-(9)-Vibrationskomponente in einem Maximum-Vibrationsbereich des Fahrzeugkörpers umfaßt;
Definieren einer zweiten Phasendifferenz zwischen einem resultierenden Vektor (11), der die Rotations- (10) und die Vertikal-(9)-Vibrationskomponente in einem Minimum-Vibrationsbereich des Fahrzeugkörpers umfaßt;
wobei der Schritt des Anwendens der Drehmomentschwankungen aufweist:
Anwenden der Drehmomentschwankungen unter der Annahme einer Phasendifferenz relativ zu dem Kurbelwinkel, der in einem Bereich von der ersten zu der zweiten Phasendifferenz liegt.

31. Verfahren zum geregelten Dämpfen einer Vibration in einem Fahrzeug, das durch eine Brennkraftmaschine mit innerer Verbrennung angetrieben wird, nach Anspruch 30, worin in dem Schritt des Anwendens der Drehmomentschwankungen eine Amplitude der Drehmomentschwankungen derart eingestellt wird, um die Summe einer Amplitudendifferenz zwischen der Rotationsvibrationskomponente (10) und einem resultierenden Vektor (11), der die Rotations- (10) und Vertikal-(9)-Vibrationskomponenten in dem Maximum-Vibrationsbereich umfaßt, und einer Amplitudendifferenz zwischen der Rotationsvibrationskomponente (10) und einem resultierenden Vektor (11), der die Rotations- (10) und Vertikal-(9)-Vibrationskomponenten in dem Minimum-Vibrationsbereich umfaßt, zu minimieren.

32. Verfahren zum geregelten Dämpfen einer Vibration in einem Fahrzeug, das durch eine Brennkraftmaschine mit innerer Verbrennung angetrieben wird, nach Anspruch 21, worin der Schritt des Bestimmens einer Phasendifferenz zwischen einem Kurbelwinkel und einer Hauptfrequenzkomponente der Fahrzeugvibration ferner aufweist:
Steuern des Zeitablaufs, um die Vibration der Brennkraftmaschine (1) bereitzustellen, die in der Phase ist, welche in der vorgewählten Beziehung bezüglich der Phasendifferenz definiert ist;
wobei der Schritt der Anwendens der Drehmomentschwankungen aufweist:
Anwenden der Drehmomentschwankungen unter Verwendung eines Teils des Brennkraftmaschinendrehmoments bei einem gegebenen Betrieb, um elektrische Energie zu erzeugen.

33. Verfahren zum geregelten Dämpfen einer Vibration in einem Fahrzeug, das durch eine Brennkraftmaschine mit innerer Verbrennung angetrieben wird, nach Anspruch 21, worin in dem Schritt des Anwendens der Drehmomentschwankungen die Drehmomentschwankungen von einer elektrischen Rotationsmaschine (3,18) durchgeführt werden, indem ein Energieerzeugungsmodus und ein Motormodus umgeschaltet werden, wobei der Energieerzeugungsmodus dazu dient, einen Teil des Brennkraftmaschinendrehmoments in elektrische Energie umzuwandeln, und wobei der Motormodus dazu dient, ein zusätzliches Drehmoment an der Brennkraftmaschine (1) bereitzustellen;
wobei der Schritt des Bestimmens einer Phasendifferenz zwischen einem Kurbelwinkel und einer Hauptfrequenzkomponente der Fahrzeugvibration ferner aufweist:
Steuern eines Zeitablaufs des Umschaltens zwischen dem Energieerzeugungsmodus und dem Motormodus, um zu bewirken, daß die elektrische Rotationsmaschine (3,18) die elektrische Energie erzeugt, die erforderlich ist, um die elektrische Energie sicherzustellen, die bei einer gegebenen elektrischen Last des Fahrzeugs verbraucht wird.

34. Verfahren zum geregelten Dämpfen einer Vibration in einem Fahrzeug, das durch eine Brennkraftmaschine mit innerer Verbrennung angetrieben wird, nach Anspruch 33, worin der Schritt des Bestimmens einer Phasendifferenz zwischen einem Kurbelwinkel und einer Hauptfrequenzkomponente der Fahrzeugvibration ferner aufweist:
Steuern des Zeitablaufs des Umschaltens zwischen dem Energieerzeugungsmodus und dem Motormodus gemäß einer Kapazität einer Batterie (8), die in dem Fahrzeug montiert ist.

35. Verfahren zum geregelten Dämpfen einer Vibration in einem Fahrzeug, das durch eine Brennkraftmaschine mit innerer Verbrennung angetrieben wird, nach Anspruch 21, worin der Schritt des Bestimmens einer Phasendifferenz zwischen einem Kurbelwinkel und einer Hauptfrequenzkomponente der Fahrzeugvibration ferner aufweist:
Erfassen einer Schwankung bezüglich des Gewichts des Fahrzeugs zum Korrigieren der Phasendifferenz zwischen einer Brennkraftmaschinenumdrehung und einer Frequenz der Fahrzeugvibrationen auf der Grundlage der Schwankung bezüglich des Gewichts des Fahrzeugs.

36. Verfahren zum geregelten Dämpfen einer Vibration in einem Fahrzeug, das durch eine Brennkraftmaschine mit innerer Verbrennung angetrieben wird, nach Anspruch 35, worin der Schritt des Bestimmens einer Phasendifferenz zwischen einem Kurbelwinkel und einer Hauptfrequenzkomponente der Fahrzeugvibration ferner aufweist:
Bestimmen des Gravitationszentrums der Fahrzeugs zum weiteren Korrigieren der Phasendifferenz zwischen der Brennkraftmaschinenumdrehung und der Frequenz der Fahrzeugvibrationen auf der Grundlage des Gravitationszentrums.

37. Verfahren zum geregelten Dämpfen einer Vibration in einem Fahrzeug, das durch eine Brennkraftmaschine mit innerer Verbrennung angetrieben wird, nach Anspruch 21, worin der Schritt des Bestimmens einer Phasendifferenz zwischen einem Kurbelwinkel und einer Hauptfrequenzkomponente der Fahrzeugvibration ferner aufweist:
Erfassen einer Position eines Fahrzeuginsassen, der in dem Fahrzeug sitzt, zum Korrigieren der Phasendifferenz zwischen einer Brennkraftmaschinenumdrehung und einer Frequenz der Fahrzeugvibrationen auf der Grundlage der Position des Fahrzeuginsassen.

## Revendications

1. Véhicule mû par un moteur à combustion interne et muni d'un système de commande d'amortissement des vibrations, le véhicule comprenant :
une machine tournante électrique (13, 18) reliée de façon fonctionnelle au moteur à combustion interne (1),
un moyen de détection d'angle de vilebrequin (6) destiné à détecter un angle de vilebrequin du moteur à combustion interne (1),
un moyen de détection de condition de fonctionnement du moteur (4, 7, 17) destiné à détecter une condition de fonctionnement du moteur liée à une différence de phase entre l'angle de vilebrequin détecté par ledit moyen de détection d'angle de vilebrequin (6) et une composante de fréquence principale de vibrations du véhicule comprenant un vecteur résultant défini par une composante de vibrations de rotation et une composante de vibrations verticales,
un moyen de détermination de mode de mise en oeuvre (4) destiné à déterminer un mode de mise en oeuvre de ladite machine tournante électrique (3, 18) sur la base de la condition de fonctionnement du moteur détectée par ledit moyen de détection de condition de fonctionnement du moteur (4, 7, 17), et sur la base d'une série de conditions préétablies associée à des modes de mise en oeuvre correspondants, qui déterminent à leur tour une séquence de cadencement respective pour la commutation de la machine tournante électrique entre un mode de génération d'énergie et un mode moteur de manière à réduire à la fois la composante de vibrations de rotation et la composante de vibrations verticales, et
un moyen de commande (4, 5) destiné à commander ladite machine tournant électrique (3, 18) sur la base du mode de mise en oeuvre déterminé par ledit moyen de détermination de mode de mise en oeuvre (4).

2. Véhicule mû par un moteur à combustion interne et muni d'un système de commande d'amortissement des vibrations selon la revendication 1, dans lequel ledit moyen de détection de condition de fonctionnement du moteur détecte une condition de fonctionnement au ralenti du moteur à combustion interne (1) en tant que condition de fonctionnement du moteur.

3. Véhicule mû par un moteur à combustion interne et muni d'un système de commande d'amortissement des vibrations selon la revendication 1, dans lequel ledit moyen de détection de condition de fonctionnement du moteur détecte un régime moteur du moteur à combustion interne (1) en tant que condition de fonctionnement du moteur.

4. Véhicule mû par un moteur à combustion interne et muni d'un système de commande d'amortissement des vibrations selon la revendication 1, dans lequel ledit moyen de détection de condition de fonctionnement du moteur détecte un régime moteur et un degré d'ouverture d'un papillon des gaz du moteur à combustion interne (1) en tant que condition de fonctionnement du moteur.

5. Véhicule mû par un moteur à combustion interne et muni d'un système de commande d'amortissement des vibrations selon la revendication 1, dans lequel ladite machine tournante électrique (3, 18) procure une variation de couple, ledit moyen de détermination de mode de mise en oeuvre déterminant une différence de phase entre la variation de couple procurée par ladite machine tournante électrique (3, 18) et l'angle de vilebrequin du moteur à combustion interne (1) qui est nécessaire pour minimiser la composante de fréquence principale des vibrations du véhicule comprenant le vecteur résultant formé de la composante de vibrations de rotation et de la composante de vibrations verticales.

6. Véhicule mû par un moteur à combustion interne et muni d'un système de commande d'amortissement des vibrations selon la revendication 1, dans lequel la composante de fréquence principale comprend une composante de fréquence principale au niveau d'une partie d'excitation de vibrations présélectionnée de la carrosserie du véhicule, ladite machine tournante électrique (3, 18) procurant une variation de couple, ledit moyen de détermination de mode de mise en oeuvre déterminant une différence de phase entre la variation de couple procurée par ladite machine tournante électrique (3, 18) et l'angle de vilebrequin du moteur à combustion interne (1) qui est nécessaire pour minimiser la composante de fréquence principale au niveau de la partie d'excitation de vibrations présélectionnée.

7. Véhicule mû par un moteur à combustion interne et muni d'un système de commande d'amortissement des vibrations selon la revendication 1, dans lequel ladite machine tournante électrique (3, 18) procure une variation de couple, ledit moyen de détermination de mode de mise en oeuvre déterminant une différence de phase entre la variation de couple procurée par ladite machine tournante électrique (3, 18) et l'angle de vilebrequin du moteur à combustion interne (1) ainsi qu'une amplitude de la variation de couple qui sont nécessaires afin de minimiser la composante de fréquence principale.

8. Véhicule mû par un moteur à combustion interne et muni d'un système de commande d'amortissement des vibrations selon la revendication 1, dans lequel la composante de fréquence principale comprend une composante de fréquence principale au niveau d'une partie d'excitation de vibrations présélectionnée de la carrosserie du véhicule, ladite machine tournante électrique (3, 18) procurant une variation de couple, ledit moyen de détermination de mode de mise en oeuvre déterminant une différence de phase entre la variation de couple procurée par ladite machine tournante électrique (3, 18) et l'angle de vilebrequin du moteur à combustion interne (1) ainsi qu'une amplitude de la variation de couple qui sont nécessaires afin de minimiser la composante de fréquence principale.

9. Véhicule mû par un moteur à combustion interne et muni d'un système de commande d'amortissement des vibrations, le véhicule comprenant ;
une machine tournante électrique (13, 18) reliée de façon fonctionnelle au moteur à combustion interne (1),
un moyen de détection de vibrations (20) destiné à détecter une composante de fréquence principale des vibrations du véhicule comprenant un vecteur résultant défini par une composante de vibrations de rotation et une composante de vibrations verticales,
un moyen de détermination de mode de mise en oeuvre (4) destiné à déterminer un mode de mise en oeuvre de ladite machine tournante électrique (3, 18) sur la base de la condition de fonctionnement du moteur détectée par un moyen de détection de condition de fonctionnement du moteur (4, 7, 17), et sur la base de ladite composante de fréquence principale des vibrations du véhicule détectée par ledit moyen de détection de vibrations (20), après quoi une séquence de cadencement respective destinée à la commutation de la machine tournante électrique entre un mode de génération d'énergie et un mode moteur est déterminée de manière à réduire à la fois la composante de vibrations de rotation et la composante de vibrations verticales, et
un moyen de commande (4, 5) destiné à commander ladite machine tournante électrique (3, 18) sur la base du mode de mise en oeuvre déterminé par ledit moyen de détermination de mode de mise en oeuvre (4).

10. Véhicule mû par un moteur à combustion interne muni d'un système de commande d'amortissement des vibrations selon la revendication 9, dans lequel ladite machine tournante électrique (3, 18) procure une variation de couple, ledit moyen de détermination de mode de mise en oeuvre déterminant une différence de phase entre la variation de couple procurée par ladite machine tournante électrique (3, 18) et un angle de vilebrequin du moteur à combustion interne (1) sur la base de la composante de fréquence principale détectée par ledit moyen de détection de vibrations (20), l'angle de phase étant déterminé de façon à minimiser une composante de fréquence principale développée au niveau d'une partie d'excitation de vibrations présélectionnée de la carrosserie du véhicule.

11. Véhicule mû par un moteur à combustion interne et muni d'un système de commande d'amortissement des vibrations selon la revendication 9, dans lequel ladite machine tournante électrique (3, 18) procure une variation de couple, ledit moyen de détermination de mode de mise en oeuvre déterminant une amplitude de la variation de couple procurée par la machine tournante électrique (3, 18) ainsi qu'une différence de phase entre la variation de couple et un angle de vilebrequin du moteur à combustion interne (1) sur la base de la composante de fréquence principale détectée par ledit moyen de détection de vibrations (20), l'amplitude et l'angle de phase étant déterminés de façon à minimiser une composante de fréquence principale développée au niveau d'une partie d'excitation de vibrations présélectionnée de la carrosserie du véhicule.

12. Véhicule mû par un moteur à combustion interne et muni d'un système de commande d'amortissement des vibrations selon la revendication 9, dans lequel ladite machine tournante électrique (3, 18) est munie d'un générateur-moteur électrique qui établit une transmission d'énergie électrique entre la machine tournante électrique (3, 18) et un moyen de batterie (8).

13. Véhicule mû par un moteur à combustion interne et muni d'un système de commande d'amortissement des vibrations selon la revendication 9, dans lequel ladite machine tournante électrique (3, 18) est reliée à un volant d'inertie du moteur à combustion interne (1) afin d'établir une transmission de couple entre la machine tournante électrique (3, 18) et le volant (90).

14. Véhicule mû par un moteur à combustion interne et muni d'un système de commande d'amortissement des vibrations selon la revendication 12, dans lequel ledit moyen de commande (4, 5) commute entre un mode de génération d'énergie et un mode moteur dans ladite machine tournante électrique (3, 18) afin de procurer un couple amortissant les vibrations.

15. Véhicule mû par un moteur à combustion interne et muni d'un système de commande d'amortissement des vibrations selon la revendication 12, dans lequel ledit moyen de commande (4, 5) commande ladite machine tournante électrique (3, 18) afin qu'elle produise ou consomme de l'énergie électrique à l'intérieur d'une plage allant d'un niveau de génération d'énergie maximum à un niveau de consommation d'énergie maximum de façon à obtenir une oscillation présentant la même fréquence que la composante de fréquence principale de façon à réduire la composante de vibrations de rotation et la composante de vibrations verticales.

16. Véhicule mû par un moteur à combustion interne et muni d'un système de commande d'amortissement des vibrations selon la revendication 9, dans lequel ladite machine tournante électrique (3, 18) est munie d'un moteur à courant alternatif (18), ledit moyen de commande (4, 5) commandant la quantité d'énergie électrique produite par le moteur à courant alternatif.

17. Véhicule mû par un moteur à combustion interne et muni d'un système de commande d'amortissement des vibrations selon la revendication 16, dans lequel ledit moyen de commande (4, 5) commande ladite machine tournante électrique (3, 18) de façon qu'elle fonctionne à l'intérieur d'une plage allant d'un niveau de génération d'énergie maximum à un niveau de non-génération d'énergie afin d'obtenir une oscillation présentant une fréquence oscillant en synchronisme avec la composante de fréquence principale des vibrations du véhicule.

18. Véhicule mû par un moteur à combustion interne et muni d'un système de commande d'amortissement des vibrations selon la revendication 9, comprenant en outre un moyen de détection de position de passager de véhicule (70, 75, 80) destiné à détecter la position d'un passager du véhicule occupant le véhicule, le mode de mise en oeuvre de ladite machine tournante électrique (3, 18) étant corrigé sur la base de la position du passager du véhicule.

19. Véhicule mû par un moteur à combustion interne et muni d'un système de commande d'amortissement des vibrations selon la revendication 9, comprenant en outre un moyen de capteur de charge utile (60) destiné à détecter le poids du véhicule, le mode de mise en oeuvre de ladite machine tournante électrique (3, 18) étant corrigé sur la base du poids du véhicule.

20. Véhicule mû par un moteur à combustion interne et muni d'un système de commande d'amortissement des vibrations selon la revendication 19, dans lequel le moyen de capteur de charge utile (60) comprend une pluralité de capteurs de charge utile montés sur des parties différentes du véhicule afin de déterminer le centre de gravité du véhicule, le mode de mise en oeuvre de ladite machine tournante électrique (3, 18) étant en outre corrigé sur la base du centre de gravité du véhicule.

21. Procédé d'amortissement des vibrations dans un véhicule mû par un moteur à combustion interne d'une façon commandée, le procédé comprenant les étapes consistant à :
déterminer une différence de phase entre un angle de vilebrequin et une composante de fréquence principale des vibrations du véhicule comprenant un vecteur résultant (11) défini par une composante de vibrations en rotation (10) et une composante de vibrations verticales (9) afin de fournir un cadencement destiné à des variations de couple,
appliquer des variations de couple au vilebrequin de manière à produire un vecteur d'amortissement des vibrations (15) présentant la même fréquence que le vecteur de vibration résultant (11) en opposition de phase à celui-ci de manière à réduire la composante de vibrations verticales (9) et la composante de vibrations en rotation du véhicule (10).

22. Procédé d'amortissement des vibrations dans un véhicule mû par un moteur à combustion interne d'une façon commandée selon la revendication 21, dans lequel l'étape de détermination d'une différence de phase entre un angle de vilebrequin et une composante de fréquence principale de vibrations du véhicule comprend l'étape de détermination d'un angle de vilebrequin du moteur (1).

23. Procédé d'amortissement des vibrations dans un véhicule mû par un moteur à combustion interne d'une façon commandée selon la revendication 22, dans lequel l'étape de détermination d'une différence de phase entre un angle de vilebrequin et une composante de fréquence principale des vibrations du véhicule comprend en outre :
la détermination d'un régime du moteur,
la détermination d'une position du papillon des gaz,
grâce à quoi la différence de phase entre l'angle de vilebrequin et le vecteur résultant (11) comprenant les composantes de rotation (10) et verticales (9) est déterminée sur la base du régime du moteur et du degré d'ouverture du papillon des gaz.

24. Procédé d'amortissement des vibrations dans un véhicule mû par un moteur à combustion interne d'une façon commandée selon la revendication 22, dans lequel l'étape de détermination d'une différence de phase entre un angle de vilebrequin et une composante de fréquence principale des vibrations du véhicule, comprend en outre :
la détermination du régime du moteur,
grâce à quoi la différence de phase entre un angle de vilebrequin et une composante de fréquence principale des vibrations du véhicule est déterminée conformément à une variation du régime moteur.

25. Procédé d'amortissement des vibrations dans un véhicule mû par un moteur à combustion interne d'une façon commandée selon la revendication 22, dans lequel l'étape de détermination d'une différence de phase entre un angle de vilebrequin et une composante de fréquence principale des vibrations du véhicule comprend en outre :
la détermination d'un angle de phase entre un vecteur résultant (11) du moteur (1) et l'angle de vilebrequin en un emplacement où des variations de couple sont appliquées,
la commande du cadencement desdites variations de couple afin d'obtenir un vecteur d'amortissement des vibrations (15) d'une phase définie suivant une relation présélectionnée par rapport à l'angle de phase.

26. Procédé d'amortissement des vibrations dans un véhicule mû par un moteur à combustion interne d'une façon commandée selon la revendication 22, dans lequel l'étape de détermination d'une différence de phase entre un angle de vilebrequin et une composante de fréquence principale des vibrations du véhicule comprend en outre :
la détermination d'une amplitude du vecteur résultant (11) comprenant les composantes de vibrations de rotation (10) et verticales (9),
la commande du cadencement desdites variations de couple afin d'obtenir le vecteur d'amortissement des vibrations (15) d'une phase définie suivant une relation présélectionnée par rapport à la différence de phase avec l'amplitude.

27. Procédé d'amortissement des vibrations dans un véhicule mû par un moteur à combustion interne d'une façon commandée selon la revendication 22, dans lequel l'étape de détermination d'une différence de phase entre un angle de vilebrequin et une composante de fréquence principale de vibrations du véhicule comprend en outre :
la détermination d'un régime du moteur,
la détermination d'une différence de phase entre l'angle de vilebrequin et la variation de couple permettant de minimiser les vibrations du véhicule engendrées au niveau d'une partie présélectionnée de la carrosserie du véhicule conformément au régime du moteur,
la détermination d'une amplitude de variation de couple permettant de minimiser les vibrations du véhicule engendrées au niveau d'une partie présélectionnée de la carrosserie du véhicule conformément au régime du moteur.

28. Procédé d'amortissement des vibrations dans un véhicule mû par un moteur à combustion interne d'une façon commandée selon la revendication 22, dans lequel l'étape de détermination d'une différence de phase entre un angle de vilebrequin et une composante de fréquence principale des vibrations du véhicule comprend en outre :
la détermination du régime du moteur,
la détermination de la position du papillon des gaz,
la détermination de la différence de phase entre un angle de vilebrequin et la variation de couple permettant de minimiser les vibrations du véhicule conformément au régime du moteur et au degré d'ouverture du papillon des gaz,
la détermination d'une amplitude de la variation de couple permettant de minimiser les vibrations du véhicule sur la base du régime du moteur et du degré d'ouverture du papillon des gaz.

29. Procédé d'amortissement des vibrations dans un véhicule mû par un moteur à combustion interne d'une façon commandée selon la revendication 22, dans lequel l'étape de détermination d'une différence de phase entre un angle de vilebrequin et une composante de fréquence principale de vibrations du véhicule comprend en outre :
la détection du vecteur résultant (11) comprenant les composantes de vibrations de rotation (10) et verticales (9),
en réponse au vecteur résultant détecté (11), la correction du cadencement déterminé sur la base de la différence de phase afin de réduire les vibrations du véhicule.

30. Procédé d'amortissement des vibrations dans un véhicule mû par un moteur à combustion interne d'une façon commandée selon la revendication 22, dans lequel l'étape de détermination d'une différence de phase entre un angle de vilebrequin et une composante de fréquence principale de vibrations du véhicule comprend en outre :
la définition d'une première différence de phase entre un vecteur résultant (11) comprenant les composantes de vibrations de rotation (10) et verticales (9) dans une région de vibrations maximum de la carrosserie du véhicule,
la définition d'une seconde différence de phase entre un vecteur résultant (11) comprenant les composantes de vibrations de rotation (10) et verticales (9) dans une région de vibrations minimum de la carrosserie du véhicule,
dans lequel l'étape d'exécution des variations de couple comprend ;
l'exécution des variations de couple en adoptant une différence de phase par rapport à l'angle de vilebrequin qui se trouve dans une plage allant de la première à la seconde différence de phase.

31. Procédé d'amortissement des vibrations dans un véhicule mû par un moteur à combustion interne d'une façon commandée selon la revendication 30, dans lequel dans l'étape d'exécution de variations de couple, une amplitude des variations de couple est établie afin de minimiser la somme d'une différence d'amplitude entre la composante de vibrations de rotation (10) et un vecteur résultant (11) comprenant les composantes des vibrations de rotation (10) et verticales (9) dans la région de vibrations maximum et d'une différence d'amplitude entre la composante de vibrations de rotation (10) et un vecteur résultant (11) comprenant les composantes de vibrations de rotation (10) et verticales (9) dans la région des vibrations minimum.

32. Procédé d'amortissement des vibrations dans un véhicule mû par un moteur à combustion interne d'une façon commandée selon la revendication 21, dans lequel l'étape de détermination d'une différence de phase entre un angle de vilebrequin et une composante de fréquence principale des vibrations du véhicule comprend en outre :
la commande du cadencement de façon à appliquer au moteur (1) une oscillation qui se trouve dans la phase définie suivant la relation présélectionnée avec la différence de phase,
dans lequel l'étape d'exécution de variations de couple comprend :
l'exécution des variations de couple en utilisant une partie du couple du moteur lors d'une mise en oeuvre donnée afin de produire de l'énergie électrique.

33. Procédé d'amortissement des vibrations dans un véhicule mû par un moteur à combustion interne d'une façon commandée selon la revendication 21, dans lequel dans l'étape consistant à exécuter des variations de couple, les variations de couple sont exécutées par une machine tournante électrique (3, 18) grâce à une commutation entre un mode de génération d'énergie et un mode moteur, le mode de génération d'énergie consistant à transformer une partie du couple du moteur en énergie électrique, le mode moteur consistant à appliquer un couple supplémentaire au moteur (1),
dans lequel l'étape de détermination d'une différence de phase entre un angle de vilebrequin et une composante de fréquence principale des vibrations du véhicule comprend en outre :
la commande du cadencement de commutation entre le mode de génération d'énergie et le mode moteur de façon que la machine tournante électrique (3, 18) produise l'énergie nécessaire pour assurer l'énergie électrique consommée dans une charge électrique donnée du véhicule.

34. Procédé d'amortissement des vibrations dans un véhicule mû par un moteur à combustion interne d'une façon commandée selon la revendication 33, dans lequel l'étape de détermination d'une différence de phase entre un angle de vilebrequin et une composante de fréquence principale des vibrations du véhicule comprend en outre :
la commande du cadencement de commutation entre le mode de génération d'énergie et le mode moteur conformément à la capacité d'une batterie (8) montée dans le véhicule.

35. Procédé d'amortissement des vibrations dans un véhicule mû par un moteur à combustion interne d'une façon commandée selon la revendication 21, dans lequel l'étape de détermination d'une différence de phase entre un angle de vilebrequin et une composante de fréquence principale des vibrations du véhicule comprend en outre :
la détection d'une variation de poids du véhicule afin de corriger la différence de phase entre la rotation du moteur et la fréquence des vibrations du véhicule sur la base de la variation de poids du véhicule.

36. Procédé d'amortissement des vibrations dans un véhicule mû par un moteur à combustion interne d'une façon commandée selon la revendication 35, dans lequel l'étape de détermination d'une différence de phase entre un angle de vilebrequin et une composante de fréquence principale des vibrations du véhicule comprend en outre :
la détermination du centre de gravité du véhicule afin de corriger en outre la différence de phase entre la rotation du moteur et la fréquence des vibrations du véhicule sur la base du centre de gravité.

37. Procédé d'amortissement des vibrations dans un véhicule mû par un moteur à combustion interne d'une façon commandée selon la revendication 21, dans lequel l'étape de détermination d'une différence de phase entre un angle de vilebrequin et une composante de fréquence principale des vibrations du véhicule comprend en outre :
la détection de la position d'un passager du véhicule occupant le véhicule afin de corriger la différence de phase entre la rotation du moteur et la fréquence des vibrations du véhicule sur la base de la position du passager du véhicule.
